# EUROPEAN PATENT SPECIFICATION

(11) **EP 2 205 043 B1**
(45) Date of publication and mention of the grant of the patent: **25.01.2017**
(21) Application number: 08840537.8
(22) Date of filing: 16.10.2008
(51) Int. Cl.: H05B 6/68, H05B 6/70

(54) **MICROWAVE HEATING DEVICE**
MIKROWELLENHEIZVORRICHTUNG
APPAREIL DE CHAUFFAGE PAR MICRO-ONDES

(30) Priority: 18.10.2007 JP 2007271150
(43) Date of publication of application: 07.07.2010
(73) Proprietor: Panasonic Corporation, Kadoma-shi Osaka 571-8501 (JP)
(72) Inventor: YASUI, Kenji, Osaka 540-6207 (JP); NOBUE, Tomotaka, Osaka 540-6207 (JP); OOMORI, Yoshiharu, Osaka 540-6207 (JP); MIHARA, Makoto, Osaka 540-6207 (JP)
(74) Representative: Eisenführ Speiser
(86) International application number: PCT/JP2008/002930
(87) International publication number: WO 2009/050893

(56) References cited:
- EP-A2- 1 643 641
- WO-A1-02/23953
- WO-A1-2008/018466
- WO-A2-02/35886
- JP-A- 51 011 244
- JP-A- 52 019 342
- JP-A- 56 096 487
- JP-A- 59 228 395
- JP-A- 61 032 390
- JP-A- 2000 357 583
- JP-A- 2008 269 793
- JP-B- 47 012 595
- JP-T- 2004 512 661
- JP-U- 53 162 446

## Description

### TECHNICAL FIELD

The present invention relates to a microwave heating apparatus including a microwave generator part, which is constructed by using semiconductor elements serving as solid-state components.

### BACKGROUND ART

A representative apparatus of the microwave heating apparatus heating an object to be heated with a microwave includes a microwave oven. According to the microwave oven, a microwave generated by a microwave generator part is radiated into a metal heating chamber, and the object to be heated is heated by the radiated microwave in the heating chamber.

Magnetron has been used in the microwave generator part in a conventional microwave oven. A microwave generated by magnetron is supplied into a heating chamber through a waveguide tube and radiated to the object to be heated, whereby the object to be heated is heated.

As the microwave generator part to generate the microwave, the one composed of the semiconductor elements serving as the solid-state components have attracted attention.

Such microwave generator part has a semiconductor oscillator part, a divider part to divide an output of the semiconductor oscillator part, a plurality of amplifier parts to amplify the divided outputs, and a synthetic part to re-synthesize the outputs of the amplifier parts, and a phase sifter is provided between the divider part and the amplifier part. As a microwave heating apparatus using the above microwave generator part, a microwave oven is disclosed in Japanese Unexamined Patent Publication No. S 56-132793, for example.

According to the microwave oven disclosed in Japanese Unexamined Patent Publication No. S 56-132793, a phase shifter switches the length of a transmission line of a microwave by the on/off characteristics of a diode. According to the microwave oven, 90-degree and 180-degree hybrid type couplers are used as synthesizers to form two outputs. According to the conventional microwave oven, the phases between the two outputs are set to the same phase or opposite phases by controlling the phase shifter to vary a power ratio between the two outputs. According to the conventional microwave oven having such phase shifter, the microwaves radiated from the two outputs of the synthesizer are switched to the same phase or the opposite phase by the phase shifter to vary the power ratio and phase difference radiated from two radiation antennas.

Prior art document WO 02/23953 A1 discloses a microwave oven comprising a microwave generator which is operatively connected to a plurality of feeding ports. The microwave generator is connected to the feeding ports by means of a transmission line which connects to the feeding ports via a switch associated with a respective feeding port. While being controlled by a control unit, the switches are operated to stop the feeding from a respective feeding port. The switches comprise means for measuring the microwave power that is reflected from each feeding port. The results of measurements are transmitted to the control unit. The control unit uses the measurements to control the microwave feeding to suitable feeding port. The feeding ports are arranged to feed one predetermined mode each in the cavity, and disposed at positions depending on an inherent resonance mode which is decided by a configuration (along x-axis, y-axis and z-axis) of the cavity. The suitable feeding port for radiating a specific resonance mode is selected by using the switch to reduce the reflected microwave power received by the generator.

Prior art document WO 02/35886 A2 discloses that a microwave generator of a microwave oven is operatively connected to a first feeding port via a microwave circulator. The circulator is arranged to direct any microwave power which is reflected from the first feeding port to a second feeding port. That is, the radiation that is reflected from the first feeding port is thus fed to the cavity accommodating the object to be heated via the second feeding port.

The cited document EP 1 643 641 A2 discloses a high-frequency heating device including a solid-state oscillator for generating microwave without using a magnetron. As a result, in the configuration of the high-frequency heating device, there is no more need to use a vacuum tube or a filament to generate microwave, thereby enabling size reduction and life cycle increase, and suppression of unwanted emission. This document specifically teaches that the microwave generated by an oscillator is amplified by an amplifier, and sent out to an antenna via an isolator.

### DISCLOSURE OF INVENTION

### PROBLEMS TO BE SOLVED BY THE INVENTION

According to the microwave heating apparatus represented by the microwave oven, an object to be heated having a different configuration, kind, size and amount is contained in the heating chamber to which the microwave is supplied. While the microwave is radiated to the object to be heated contained in the heating chamber, reflected powers having different values are generated based on the configuration, kind, size, and amount of the object to be heated. When the generated reflected power is high, it means that heating efficiency is low and the object to be heated is not heated in a desired condition with high efficiency. Therefore, it is an important issue to be accomplished in this field to enhance the heating efficiency by reducing the reflected power as low as possible when the object to be heated having the different configuration, kind, size, and amount contained in the heating chamber to which the microwave is supplied is heated into the condition desired by the user.

The present invention is made to accomplish the above issue in the conventional microwave heating apparatus, and it is an object to provide a microwave heating apparatus capable of heating various objects to be heated having different configurations, kinds, sizes, and amounts contained in a heating chamber with high efficiency by reducing a reflected power of a microwave radiated from microwave supplying means, from the heating chamber. In addition, it is another object of the present invention to provide a microwave heating apparatus capable of forming a uniform electromagnetic field distribution of the microwave in a heating chamber and performing a heating operation appropriately based on an object to be heated and capable of being miniaturized, by appropriately arranging plurality of microwave supplying means in different wall surfaces of the heating chamber.

The present invention achieves the above objects and provides the microwave heating apparatus capable of heating the object to be heated to be in the desired condition with high efficiency by reducing the reflected power generated based on the object to be heated having the different configuration, kind, size, and amount, by arranging a first feeding part in the wall surface of the heating chamber, and arranging a second feeding part to radiate the reflected power received by the first feeding part to the heating chamber again, serving as the plurality of microwave supplying means each having a function to radiate the microwave.

### MEANS FOR SOLVING THE PROBLEMS

These objects are accomplished by a microwave heating apparatus as set out in the appended claims.

According to the invention the microwave heating apparatus comprises a heating chamber containing an object to be heated; an oscillator part; a power divider part to divide an output of the oscillator part into a plurality of outputs; a plurality of phase variable parts each of which is connected to an output of the power divider part to vary an output phase of the power divider part; a plurality of power amplifier parts to amplify the outputs of the phase variable parts; a plurality of first feeding parts to supply the outputs of the power amplifier parts to the heating chamber; a plurality of second feeding parts to radiate again the reflected power of the microwave received by the first feeding parts to the heating chamber; a circulation type of non-reciprocal circuit to supply the reflected power from the first feeding part to the second feeding part; a plurality of power detector parts to detect the reflected power supplied from the second feeding parts to the power amplifier parts; and a control part to control the oscillator part, the power amplifier parts and the phase variable parts on the bases of information on the reflected power detected by the power detector parts, wherein a pair of the first feeding part and the second feeding part, which is arranged on each wall of the heating chamber, has openings for radiating the microwaves to the heating chamber, an opening of the first feeding part is configured to radiate the microwaves in different dominant excitation directions from the microwave radiated from the opening of the second feeding part, and the control part controls a frequency of the oscillator part and phases of the phase variable parts so that the reflected power is minimum.

The invention may be further be described by a microwave heating apparatus in view of a first aspect, the microwave heating apparatus comprising a heating chamber containing an object to be heated, an oscillator part, a power divider part to divide an output of the oscillator part into a plurality of outputs, a plurality of power amplifier parts to amplify the outputs of the power divider part, a plurality of first feeding parts to supply the outputs of the power amplifier parts to the heating chamber, a plurality of second feeding parts to supply reflected powers inputted to the first feeding parts to the heating chamber, and a circulation type of non-reciprocal circuit to supply the reflected power from the first feeding part to the second feeding part, in which the first feeding part and the second feeding part are constituted in such a manner that excitation directions of microwaves supplied to the heating chamber are different.

According to the microwave heating apparatus in view of the first aspect constituted as described above, since the reflected power of the microwave received by the first feeding part is radiated again to the heating chamber by the second feeding part, the microwave outputted from the power amplifier part can be absorbed into an object to be heated with high efficiency. In addition, according to the present invention, since the microwaves are radiated from the different plurality of feeding parts, the microwaves can be radiated to the object to be heated directly from different directions with high efficiency.

The microwave heating apparatus in view of a second aspect according to the present invention may have a constitution in which at least two microwave generator parts each composed of the oscillator part, the power divider part, the power amplifier part, the first feeding part, the second feeding part, and the non-reciprocal circuit according to the first aspect are provided. According to the microwave heating apparatus in view of the second aspect constituted as described above, since the microwaves can be radiated directly to the object to be heated from different directions, the object to be heated having different configuration, kind, size, and amount can be heated to be in the desired condition with high efficiency.

The microwave heating apparatus in view of a third aspect according to the present invention may have a constitution in which the first feeding part and the second feeding part according to the second aspect are arranged in the same wall surface of the wall surfaces constituting the heating chamber. According to the microwave heating apparatus in view of the third aspect constituted as described above, a physical distance between the first feeding part and the second feeding part is minimized and a transmission loss in the transmission line between both feeding parts is considerably reduced, so that the microwave outputted from the power amplifier part can be radiated into the heating chamber with high efficiency.

The microwave heating apparatus in view of a fourth aspect according to the present invention may have a constitution in which the plurality of first feeding parts according to the second aspect are arranged in the same wall surface of the wall surfaces constituting the heating chamber. According to the microwave heating apparatus in view of the fourth aspect constituted as described above, a distance of the transmission line connecting the components in the microwave generator part can be physically minimized, the transmission loss in the transmission line can be minimized, so that the microwave outputted from the power amplifier part can be radiated with high efficiency.

The microwave heating apparatus in view of a fifth aspect according to the present invention may have a constitution in which the plurality of first feeding parts according to the second aspect are arranged in the different wall surfaces of the wall surfaces constituting the heating chamber. According to the microwave heating apparatus in view of the fifth aspect constituted as described above, the microwave can be radiated directly to the object to be heated from different directions, so that even when the object to be heated having different configuration, kind, size, and amount is set in the heating chamber, the microwave radiated into the heating chamber can be absorbed in the object to be heated efficiently, and the object to be heated can be effectively heated while the reflected power is minimized, so that the heating can be accomplished in a short time.

The microwave heating apparatus in view of a sixth aspect according to the present invention may have a constitution in which the plurality of oscillator parts according to the second aspect oscillate at the same frequency. According to the microwave heating apparatus in view of the sixth aspect constituted as described above, the oscillator part of each microwave generator part constituting the microwave heating apparatus can be shared, so that the microwave heating apparatus can be miniaturized.

The microwave heating apparatus in view of a seventh aspect according to the present invention may have a constitution in which the plurality of oscillator parts according to the second aspect oscillate at the different frequencies. According to the microwave heating apparatus in view of the seventh aspect constituted as described above, since the frequency showing the smallest reflected power can be independently selected in each microwave generator part, even when the object to be heated having different configuration, kind, size, and amount is set in the heating chamber, the microwave radiated into the heating chamber can be absorbed in the object to be heated efficiently, and the object to be heated can be effectively heated while the reflected power is minimized, so that the heating can be accomplished in a short time.

The microwave heating apparatus in view of an example useful for understanding the invention may have a constitution in which the microwave generator part according to the second aspect has a phase variable part connected to an output of the power divider part to vary an output phase of the power divider part, and a control part. According to the microwave heating apparatus in view of the example constituted as described above, since the microwave radiated from the first feeding part can interfere at the position of the object to be heated, the microwave radiated into the heating chamber can be absorbed in the object to be heated efficiently, and the object to be heated can be effectively heated while the reflected power is minimized, so that the heating can be accomplished in a short time.

The microwave heating apparatus in view of a ninth aspect according to the present invention may have a constitution in which each of the plurality of phase variable parts according to the example variably controls an independent phase amount. According to the microwave heating apparatus in view of the ninth aspect constituted as described above, since a phase amount in each microwave generator part can be independently controlled, even when the object to be heated having different configuration, kind, size, and amount is set in the heating chamber, the microwave radiated into the heating chamber can be absorbed in the object to be heated efficiently, and the object to be heated can be effectively heated while the reflected power is minimized, so that the heating can be accomplished in a short time.

The microwave heating apparatus in view of a tenth aspect according to the present invention may have a constitution in which the microwave generator part according to the first aspect has a power detector part to detect a reflected power from the heating chamber to the power amplifier part, and a control part to control an oscillation frequency of the oscillator part to be a frequency where the reflected power to the power amplifier part becomes smallest. According to the microwave heating apparatus in view of the tenth aspect constituted as described above, even when the object to be heated having different configuration, kind, size, and amount is set in the heating chamber, the object to be heated can be heated efficiently while the amplifier part is not fatally damaged due to the excessive reflected power, so that the object to be heated can be heated efficiently.

The microwave heating apparatus in view of an eleventh aspect according to the present invention may have a constitution in which a power outputted from the power amplifier part according to the tenth aspect is reduced in a predetermined rate when the reflected power detected by the power detector part becomes a predetermined value or more. According to the microwave heating apparatus in view of the eleventh aspect constituted as described above, even when the object to be heated having different configuration, kind, size, and amount is set in the heating chamber, the object to be heated can be heated efficiently while the amplifier part is not fatally damaged due to the excessive reflected power, so that the object to be heated can be heated efficiently. At the same time, since the phase difference and the oscillation frequency can be constantly maintained below a predetermined reflected power during the heating operation, even when the absorption of the electric wave and the reflection condition are varied due to the temperature rise of the object to be heated, the object to be heated can be constantly heated efficiently.

The microwave heating apparatus in view of a twelfth aspect according to the present invention may have a constitution in which the control part performs a minimum reflected power exploring operation to explore the frequency showing the smallest reflected power from frequency characteristics regarding the reflected power detected by the power detector part in a usable frequency band, in an initial state of a heating operation of the tenth aspect. According to the microwave heating apparatus in view of the twelfth aspect constituted as described above, even when the object to be heated having different configuration, kind, size, and amount is set in the heating chamber, the object to be heated can be effectively heated while the reflected power is minimized.

The microwave heating apparatus in view of a thirteenth aspect according to the present invention may have a constitution in which the control part according to the twelfth aspect lowers the output of the power amplifier part when the minimum reflected power exploring operation is performed, and raises the output of the power amplifier part when the minimum reflected power exploring operation is completed and the heating operation is performed at the frequency showing the smallest reflected power. According to the microwave heating apparatus in view of the thirteenth aspect constituted as described above, even when the object to be heated having different configuration, kind, size, and amount is set in the heating chamber, the object to be heated can be heated efficiently while the amplifier part is not fatally damaged due to the excessive reflected power, so that the object to be heated can be heated efficiently.

The microwave heating apparatus in view of a fourteenth aspect according to the present invention may have a constitution in which the control part performs a local minimum reflected power tracking operation to select the frequency showing the smaller value of the reflected power detected by the power detector part sequentially to continue the heating operation during the heating operation of the tenth aspect. According to the microwave heating apparatus in view of the fourteenth aspect constituted as described above, the reflected power can be minimized during the heating operation also, so that the object to be heated can be effectively heated.

The microwave heating apparatus in view of a fifteenth aspect according to the present invention may have a constitution in which the control part according to the fourteen aspect lowers the output of the power amplifier part when the value of the reflected power detected by the power detector part exceeds a predetermined value in the local minimum reflected power tracking operation. According to the microwave heating apparatus in view of the fifteenth aspect constituted as described above, the object to be heated can be effectively heated while the amplifier part is not fatally damaged due to an excessive reflected power.

The microwave heating apparatus in view of a sixteenth aspect according to the present invention may have a constitution in which the control part according to the fourteenth aspect stops the heating operation when the value of the reflected power detected by the power detector part exceeds a predetermined value in the local minimum reflected power tracking operation, and executes the minimum reflected power exploring operation to explore the frequency showing the smallest reflected power. According to the microwave heating apparatus in view of the sixteenth aspect constituted as described above, the apparatus can be highly reliable while the amplifier part is not fatally damaged due to an excessive reflected power during the heating operation.

### EFECT OF THE INVENTION

The microwave heating apparatus according to the present invention can heat any object to be heated having the different configuration, kind, size, and amount to be in the desired condition with high efficiency by optimally arranging the feeding part serving as the plurality of microwave supply means having the function to radiate the microwave, in the wall surface of the heating chamber, and radiating the microwave received by the first feeding part from the second feeding part to the heating chamber again.

### BRIEF DESCRIPTION OF THE DRAWINGS

Fig. 1 is a schematic view showing a constitution of a microwave heating apparatus of a first embodiment according to the present invention;
Fig. 2 is a view showing an arrangement example of feeding parts in the microwave heating apparatus of the first embodiment;
Fig. 3A is a view showing a dominant excitation direction of a first feeding part in the microwave heating apparatus of the first embodiment;
Fig. 3B is a view showing a dominant excitation direction of a second feeding part n the microwave heating apparatus of the first embodiment;
Fig. 4 is a flowchart showing a control example of a phase difference and an oscillation frequency of the microwave heating apparatus of the first embodiment;
Fig. 5 is a flowchart showing a minimum reflected power exploring operation of the microwave heating apparatus of the first embodiment;
Fig. 6 is a view showing one example of frequency characteristics in the minimum reflected power exploring operation shown in Fig. 5;
Fig. 7 is a flowchart showing a local minimum reflected power tracking operation of the microwave heating apparatus of the first embodiment;
Fig. 8A is a view to explain the local minimum reflected power tracking operation shown in Fig. 7;
Fig. 8B is a view showing an operation at an abnormal time in the local minimum reflected power tracking operation shown in Fig. 7;
Fig. 9 is a planar sectional view showing a heating chamber used in an experiment of an electromagnetic field distribution in the heating chamber by adjusting the phase difference in the microwave heating apparatus viewed from the above;
Fig. 10 is an isothermal chart showing an experiment result of an electromagnetic field distribution in the heating chamber when the phase difference is 0 degree;
Fig. 11 is an isothermal chart showing an experiment result of an electromagnetic field distribution in the heating chamber when the phase difference is 40 degree;
Fig. 12 is an isothermal chart showing an experiment result of an electromagnetic field distribution in the heating chamber when the phase difference is 80 degree;
Fig. 13 is an isothermal chart showing an experiment result of an electromagnetic field distribution in the heating chamber when the phase difference is 120 degree;
Fig. 14 is an isothermal chart showing an experiment result of an electromagnetic field distribution in the heating chamber when the phase difference is 160 degree;
Fig. 15 is an isothermal chart showing an experiment result of an electromagnetic field distribution in the heating chamber when the phase difference is 200 degree;
Fig. 16 is an isothermal chart showing an experiment result of an electromagnetic field distribution in the heating chamber when the phase difference is 240 degree;
Fig. 17 is an isothermal chart showing an experiment result of an electromagnetic field distribution in the heating chamber when the phase difference is 280 degree;
Fig. 18 is an isothermal chart showing an experiment result of an electromagnetic field distribution in the heating chamber when the phase difference is 320 degree;
Fig. 19 is a view showing an arrangement example of feeding parts in a microwave heating apparatus of a second embodiment according to the present invention;
Fig. 20 is a view to explain a minimum reflected power exploring operation in a microwave heating apparatus of a third embodiment of the present invention; and
Fig. 21 is a view to explain the minimum reflected power exploring operation in the microwave heating apparatus of the third embodiment.

### BEST MODE FOR CARRYING OUT THE INVENTION

Preferred embodiments of a microwave heating apparatus according to the present invention will be described with reference to the accompanying drawings. In addition, although a microwave oven will be described as the microwave heating apparatus in the following embodiment, the microwave oven is only illustrative and the microwave heating apparatus according to the present invention is not limited to the microwave oven and includes a microwave heating apparatus such as a heating apparatus using dielectric heat, a disposer and a semiconductor production equipment. In addition, the present invention is not limited to the following specific embodiments, and a constitution based on the same technical concept is contained in the present invention.

### (First Embodiment)

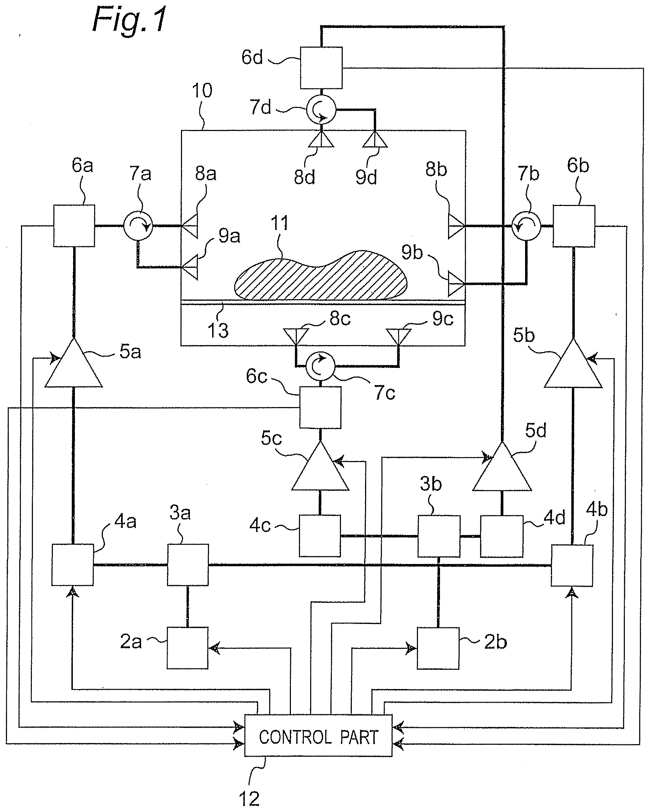

Fig. 1 is a schematic view showing a constitution of a microwave heating apparatus according to a first embodiment of the present invention. Especially, Fig. 1 is a block diagram showing a constitution of a microwave generator part serving as microwave generating means in the microwave heating apparatus in the first embodiment.

Referring to Fig. 1, the microwave generator part in the first embodiment includes, as semiconductor elements, two oscillator parts 2a and 2b, power divider parts 3a and 3b to divide the output of each of the oscillator parts 2a and 2b to two outputs, power amplifier parts 5a, 5b, 5c, and 5d to amplify the outputs of the divider parts 3a and 3b, first feeding parts 8a, 8b, 8c and 8d to radiate the microwave outputs amplified by the power amplifier parts 5a, 5b, 5c, and 5d, toward the inside of a heating chamber 10, and second feeding parts 9a, 9b, 9c, and 9d to radiate again reflected powers received by the first feeding parts 8a, 8b, 8c, and 8d toward the inside of the heating chamber through circulation type of non-reciprocal circuits 7a, 7b, 7c, and 7d.

The circulation type of non-reciprocal circuits 7a, 7b, 7c, and 7d each has three input/output ports in which a microwave power inputted from a first port is led to a second port and does not appear at a third port, and a microwave power inputted from the second port is entirely lead to the third port and does not appear at the first port. In general, such circulation type of non-reciprocal circuit is called a circulator. The non-reciprocal circuits 7a, 7b, 7c, and 7d are referred to as the circulators in the following specification.

In addition, the microwave generator part in the first embodiment has phase variable parts 4a, 4b, 4c, and 4d inserted into a microwave transmission line connecting the power divider parts 3a and 3b, and the power amplifier parts 5a, 5b, 5c, and 5d, to generate an optional phase differences as the outputs to the power amplifier parts 5a, 5b, 5c, and 5d, power detector parts 6a, 6b, 6c, and 6d inserted into a microwave transmission line connecting the power amplifier parts 5a, 5b, 5c, and 5d, and the first feeding parts 8a, 8b, 8c, and 8d to detect reflected powers received by the second feeding parts 9a, 9b, 9c, and 9d from the chamber, and a control part 12 receiving detection signals from the power detector parts 6a, 6b, 6c, and 6d to drive and control the oscillator parts 2a and 2b, the phase variable parts 4a, 4b, 4c, and 4d, and the power amplifier parts 5a, 5b, 5c, and 5d.

The circulators 7a, 7b, 7c, and 7d inserted between the power detector parts 6a, 6b, 6c, and 6d, and the first feeding parts 8a, 8b, 8c, and 8d lead the reflected power received by the first feeding parts 8a, 8b, 8c, and 8d to the second feeding parts 9a, 9b, 9c, and 9d, respectively. The control part 12 controls oscillation frequencies of the oscillator parts 2a and 2b, phase amounts of the phase variable parts 4a, 4b, 4c, and 4d, and amplification factors of the power amplifier parts 5a, 5b, 5c, and 5d, based on the reflected powers received by the power detector parts 6a 6b, 6c, and 6d.

The microwave heating apparatus of the first embodiment has the heating chamber 10 having a roughly rectangular solid structure to contain an object to be heated 11, and the heating chamber 10 is composed of a left wall surface, a right wall surface, a bottom wall surface, an upper wall surface, back wall surface, which are made of metal material, and an opening and closing door (on the front side in Fig. 1 but not shown) used when the object to be heated 11 is set. The above-described heating chamber 10 is constituted so as to confine the microwave supplied to the heating chamber to prevent it from leaking when the opening and closing door is closed. In addition, a table 13 on which the object to be heated 11 is put is provided in the heating chamber.

In addition, according to the microwave heating apparatus of the first embodiment, a pair of the first feeding parts 8a, 8b, 8c, and 8d and the second feeding parts 9a, 9b, 9c, and 9d receiving the outputs of the microwave generator part and supplying the microwaves radially into the heating chamber is arranged on each wall surface of the heating chamber 10.

According to the microwave heating apparatus in the first embodiment, the feeding parts controlled as the pair are arranged on the opposite wall surfaces. More specifically, the pair of first feeding parts 8a and 8b to which the microwaves divided by the first power divider part 3a are supplied is arranged roughly in the center of the left wall surface and the right wall surface, respectively. In addition, the second feeding parts 9a and 9b controlled as the pair which output the reflected powers received by the pair of first feeding parts 8a and 8b controlled as the pair through the circulators 7a and 7b are arranged in the left wall surface and the right wall surface, respectively.

Although the first feeding parts 8a and 8b are arranged roughly in the center of the left wall surface and the right wall surface, respectively in the first embodiment, they are shifted from each other so that their microwave radiation directions are not opposed completely. In addition, although the second feeding parts 9a and 9b are also arranged in the left wall surface and the right wall surface, respectively in the drawing, they are shifted from each other so that their microwave radiation directions are not opposed completely. The second feeding parts 9a and 9b are arranged under the first feeding parts 8a and 8b, respectively, and arranged at positions so as to surely irradiate the object to be heated 11 on the table 13 with the microwave.

According to the microwave heating apparatus of the first embodiment, the first feeding parts 8c and 8d controlled as the pair are arrange roughly in the center of the upper wall surface and the bottom wall surface of the heating chamber 10, respectively, and similarly, the second feeding parts 9c and 9d are arranged in the upper wall surface and the bottom surface of the heating chamber 10, respectively. Here, it is to be noted that the constitution of the microwave heating apparatus in the present invention is not limited to the arrangement of the feeding parts in the microwave heating apparatus of the first embodiment, and can be applied various kinds of arrangements. For example, the plurality of first feeding parts may be provided in any one of the wall surfaces, or the feeding parts controlled as the pair may be provided not in the opposed surfaces but in the adjacent wall surfaces such as the right wall surface and the bottom wall surface.

According to each of the power amplifier parts 5a, 5b, 5c, and 5d having the semiconductor element, a circuit is constituted by a conductor pattern formed on one surface of a dielectric substrate formed of a low-dielectric loss material, and a matching circuit is arranged on each of an input side and an output side of the semiconductor element for preferable operation of the semiconductor element serving as the amplifier element of each of the power amplifier parts 5a, 5b, 5c, and 5d.

A transmission circuit having a characteristic impedance of about 50Ω is formed by the conductor pattern provided on one surface of the dielectric substrate in the microwave transmission line connecting the functional blocks.

The first power divider parts 3a and the second power divider part 3b may be same-phase dividers that do not generate a phase difference between the outputs such as a Wilkinson type divider, or may be dividers that generate a phase difference between the outputs such as a Branch-line type or a Rat-Race type. The first power divider part 3a outputs about 1/2 power of the microwave power inputted from the first oscillator part 2a to the two phase variable parts 4a and 4b. In addition, the second divider part 3b outputs about 1/2 power of the microwave power inputted from the second oscillator part 2b to the two phase variable parts 4c and 4d.

In addition, each of the phase variable parts 4a, 4b, 4c, and 4d is formed of a capacity variable element changing its capacity based on an applied voltage, and a phase variable range of each of the phase variable parts 4a, 4b, 4c, and 4d is 0 degree to about 180 degrees. Therefore, the phase difference of the microwave power outputted from each of the phase variable parts 4a, 4b, 4c, and 4d can be controlled within the range of 0 degree to ±180 degrees.

The power detector parts 6a, 6b, 6c, and 6d extract the power of the reflected wave received by the second feeding parts 9a, 9b, 9c, and 9d from the heating chamber 10, and to be transmitted to the power amplifier parts 5a, 5b, 5c, and 5d through the circulators 7a, 7b, 7c, and 7d. The degree of power bonding of the power detector parts 6a, 6b, 6c, and 6d is about 40dB, and a power amount of about 1/10000 of the reflected power is extracted. An electric signal detected by each of the power detector parts 6a, 6b, 6c, and 6d is rectified by a detector diode (not shown) and smoothed by a capacitor (not shown) and the smoothed signal is inputted into the control part 12.

The control part 12 controls a drive power supplied to the first oscillator part 2a and the second oscillator part 2b, and the power amplifier parts 5a, 5b, 5c, and 5d serving as the components of the microwave generator part, and controls a voltage supplied to the phase variable parts 4a, 4b, 4c, and 4d, to optimally heat the object to be heated 11 in the heating chamber 10 to be in a state desired by a user, based on heating information obtained from the heating condition of the object to be heated inputted directly by the user or the heated state of the object to be heated during the heating, and information of the reflected powers as the power signals detected by the power detector parts 6a, 6b, 6c, and 6d. In addition, heat releasing means (not shown) for releasing heat generated mainly in the semiconductor elements provided in the power amplifier parts 5a, 5b, 5c, and 5d is provided in the microwave generator part.

In addition, to prevent a dominant excitation direction of the microwaves radiated from the first feeding parts 8a, 8b, 8c, and 8d from coinciding with the dominant excitation direction of the microwaves radiated from the second feeding parts 9a, 9b, 9c, and 9d, the first feeding parts 8a, 8b, 8c, and 8d and the second feeding parts 9a, 9b, 9c, and 9d are constituted as follows.

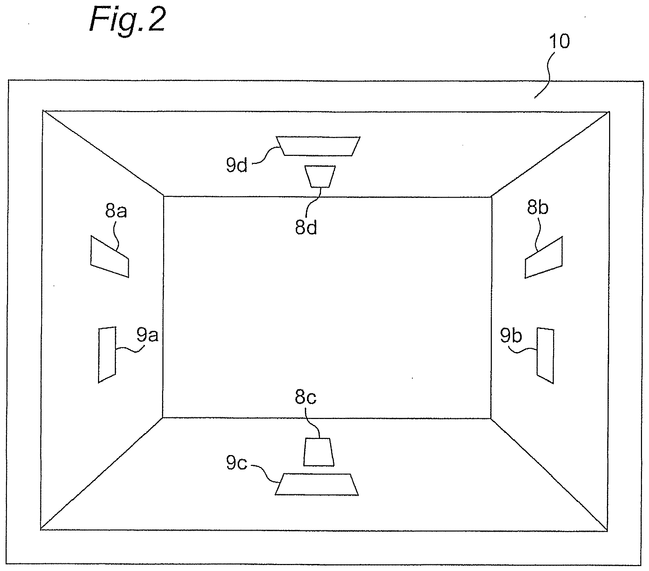

According to the microwave heating apparatus of the first embodiment, the first feeding parts 8a, 8b, 8c, and 8d and the second feeding parts 9a, 9b, 9c, and 9d, which are arranged in each wall of the heating chamber, have openings serving as antennas. Fig. 2 shows one example of the configurations of the openings of the first feeding parts 8a, 8b, 8c, and 8d and the second feeding parts 9a, 9b, 9c, and 9d. According to the open type feeding part, the configuration of the opening serving as the antenna to radiate the microwave into the heating chamber determines the dominant excitation direction of the microwave.

According to the constitutions of the first feeding parts 8a, 8b, 8c, and 8d and the second feeding parts 9a, 9b, 9c, and 9d, it is necessary to match an impedance at the opening to an impedance of the space in the heating chamber to radiate the microwave from the opening to the heating chamber efficiently. More specifically, when the impedance of the opening is designed in such a way that the reflection of the opening to the open space in the heating chamber is not more than -20dB, 99% of the power supplied to the opening can be radiated from the opening.

Since each opening of the first feeding parts 8a, 8b, 8c, and 8d and the second feeding parts 9a, 9b, 9c, and 9d serves as the antenna, when a single-mode microwave exists in a waveguide for leading the microwave to each feeding part, the design of the impedance is simple. The propagation mode of an electromagnetic wave includes three modes of a TE mode (Transverse Electric Mode), a TM mode (Transverse Magnetic Mode), and a TEM mode (Transverse Electromagnetic Mode). For example, when a rectangular waveguide tube in which a frequency of the radiated microwave is in a frequency band of 2450MNz ±50MHz used in the microwave oven, and a length ratio between a long side and a short side in the rectangular opening is 2:1 is used, in order to propagate the microwave in TE₁₀ mode in which an electric field is formed in a direction perpendicular to the short side, a WR-430 waveguide tube (EIA standard name) in which the length of the long side of the opening is 110mm and the length of the short side is 55mm is to be used. An in-tube wavelength λg at this time is about 148mm, and when the length of the short side of the opening is set to about λg/4, the microwave can be radiated from the opening efficiently.

According to the constitution of the microwave heating apparatus of the first embodiment, in view of a result of the various experiments performed by the inventor and study about them, the length of the short side of the opening of the feeding part is set to 30mm, and the length of the long side thereof is set to 80mm. Although the set length is different from 1/4 of the in-tube wavelength strictly, such a small difference does not reduce the effect of the present invention.

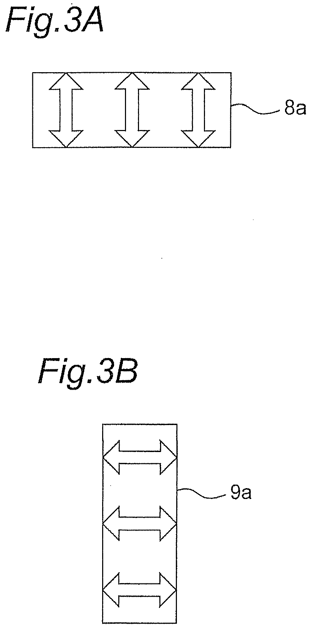

Figs. 3A and 3B are views showing the dominant excitation directions of the microwaves radiated from the openings of the first feeding part 8a and the second feeding part 9a provided in the left wall surface of the heating chamber 10. Fig. 3A shows the excitation direction (longitudinal direction in Fig. 3A) in the opening of the first feeding part 8a by arrows, and Fig. 3B shows the excitation direction (horizontal direction in Fig. 3B) in the opening of the second feeding part 9a by arrows.

According to the microwave heating apparatus of the first embodiment, the dominant excitation directions of the microwaves radiated from the first feeding part 8a in the left wall surface, the first feeding part 8b in the right wall surface, the first feeding part 8c in the bottom wall surface, and the first feeding part 8d in the upper wall surface are constituted so as to coincide with each other. In addition, the dominant excitation directions of the microwaves radiated from the second feeding part 9a in the left wall surface, the second feeding part 9b in the right wall surface, the second feeding part 9c in the bottom wall surface, and the second feeding part 9d in the upper wall surface are constituted so as to coincide with each other. Meanwhile, since the opening of the first feeding parts 8a, 8b, 8c, and 8d and the second feeding parts 9a, 9b, 9c, and 9d are arranged as shown in Fig. 2, the dominant excitation directions of the microwaves radiated from the first feeding parts 8a, 8b, 8c, and 8d and the microwaves radiated from the second feeding parts 9a, 9b, 9c, and 9d do not coincide.

The description has been made of the case where the longitudinal directions of the opening of the first feeding part 8a and the opening of the second feeding part 9a in the left wall surface are at right angles with each other as shown in Fig. 2 in the first embodiment, the present invention is not limited to this example. For example, the angle formed between the longitudinal direction of the opening of the first feeding part 8a and the longitudinal direction of the opening of the second feeding part 9a can be set to any angle such as 30 degrees and 45 degrees instead of 90 degrees.

As shown in Figs. 3A and 3B, the dominant excitation direction of the microwave radiated from each opening is in a short side direction perpendicular to the longitudinal direction of the opening and the dominant microwave is excited in the short side direction and radiated from the opening. Therefore, while the microwave oscillated in the dominant direction at the opening can easily passes through the opening from which the microwave is radiated, the microwave oscillated in the direction different from the short side direction of the opening (for example, the longitudinal direction turned at 90 degrees from the short side direction) hardly passes through that opening. Therefore, the microwaves radiated from the openings of the first feeding parts 8a, 8b, 8c, and 8d are hardly transmitted directly into the opening of the second feeding parts 9a, 9b, 9c, and 9d, so that most microwaves are radiated into the heating chamber to heat the object to be heated 11.

### [Heating operation]

Next, a description will be made of a heating operation in the microwave heating apparatus constituted as described above in the first embodiment.

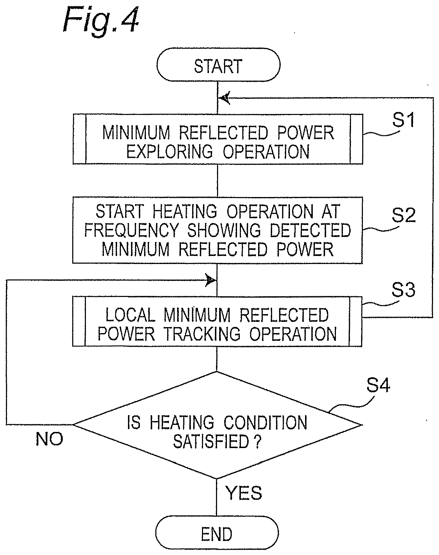

Fig. 4 is a flowchart showing the heating operation executed in the microwave heating apparatus in the first embodiment. As shown in Fig. 4, in a heating operation initial state before the actual heating operation (main heating operation) on a predetermined power in practice in the microwave heating apparatus in the first embodiment, a minimum reflected power exploring operation is performed to explore a frequency at which the reflected power from the object to be heated 11 shows a minimum value (step 1) under the condition that the object to be heated 11 is put in the heating chamber 10. During the minimum reflected power exploring operation, the microwave output is kept low. The first oscillator part 2a and the second oscillator part 2b oscillate at the frequency showing the minimum reflected power detected in step 1 to start the main heating operation performed on the actual predetermined power (step 2). In this main heating operation, a local minimum reflected power tracking operation is executed (step 3). The local minimum reflected power tracking operation is performed until the end of the heating operation, that is, until a heating condition set by the user is satisfied (for example, a set time, a set temperature or the like is satisfied) (step 4). The minimum reflected power exploring operation and the local minimum reflected power tracking operation in the microwave heating apparatus of the first embodiment will be described in detail below.

First, the user sets the object to be heated 11 in the heating chamber, and the heating condition for the object to be heated 11 is inputted at an operation part (not shown). When the user presses a heating start key, a heating start signal is generated and the heating start signal is inputted to the control part 12. When the control part 12 receives the heating start signal, it generates a control output signal, and then the microwave generator part starts its operation. The control part 12 starts a drive power supply (not shown) to supply the power to the first oscillator part 2a and the second oscillator part 2b. At this time, the control part 12 supplies a signal in which the initial oscillation frequency, 2400 MHz is set, for example, to the first oscillator part 2a and the second oscillator part 2b, and make the first oscillator part 2a and the second oscillator part 2b start the oscillation.

When the first oscillator part 2a and the second oscillator part 2b start their oscillation operations, the outputs are divided roughly into 1/2 by the first power divider part 3a and the second power divider part 3b, so that four microwave power signals are formed. The divided microwave power signals are inputted to the power amplifier parts 5a, 5b, 5c, and 5d through the phase variable parts 4a, 4b, 4c, and 4d, respectively. The control part 12 controls the drive power supply and controls the outputs of the power amplifier parts 5a, 5b, 5c, and 5d.

The microwave power signals divided by the first power divider part 3a and the second power divider part 3b are outputted as the microwave power from the four first feeding parts 8a, 8b, 8c, and 8d and radiated into the heating chamber 10 through the phase variable parts 4a, 4b, 4c, and 4d, the power amplifier parts 5a, 5b, 5c, and 5d operated in parallel, and the power detector parts 6a, 6b, 6c, and 6d. In the minimum reflected power exploring operation in the heating operation initial state before the main heating operation, each of the power amplifier parts 5a, 5b, 5c, and 5d outputs a microwave power less than 100W such as 50W. According to the minimum reflected power exploring operation, the low microwave power is radiated from the antenna to the heating chamber 10, preventing the heating amount of each of the amplifier parts 5a, 5b, 5c, and 5d from exceeding the heat amount that can be released due to the reflected power.

When the microwave power supplied into the heating chamber 10 is absorbed 100%, the reflected power from the heating chamber 10 becomes 0W. However, since the object to be heated 11 put in the heating chamber 10 is different in kind, configuration, size and amount at each time, the microwave power is not absorbed 100% by the object to be heated 11 constantly, so that the reflected power is generated in the heating chamber. The electrical characteristics of the heating chamber 10 containing the object to be heated 11 differ depending on the kind, configuration, size and amount of the object to be heated 11. Therefore, the reflected power is generated based on the output impedance of the microwave generator part and the impedance of the heating chamber 10, based on the electrical characteristics determined by the object to be heated 11. The reflected power is transmitted from the heating chamber 10 to the microwave generator part.

The microwave heating apparatus of the first embodiment is constituted such that the circulators 7a, 7b, 7c, and 7d lead the microwave powers (reflected powers) reflected from the inside of the heating chamber 10 and received by the first feeding parts 8a, 8b, 8c, and 8d, to the second feeding parts 9a, 9b, 9c, and 9d, and reradiate them from the second feeding parts 9a, 9b, 9c, and 9d into the heating chamber 10 again.

As described above, according to the microwave heating apparatus of the first embodiment, since the first feeding parts 8a, 8b, 8c, and 8d and the second feeding parts 9a, 9b, 9c, and 9d are arranged such that their excitation directions of the microwaves are different, the amount of the microwave power directly transmitted from the first feeding parts 8a, 8b, 8c, and 8d to the second feeding parts 9a, 9b, 9c, and 9d is extremely low. In addition, for the same reason, the amount of the microwave power directly transmitted from the second feeding parts 9a, 9b, 9c, and 9d to the first feeding parts 8a, 8b, 8c, and 8d is set to be extremely low. Therefore, the microwave powers outputted from the power amplifier parts 5a, 5b, 5c, and 5d are surely radiated from the first feeding parts 8a, 8b, 8c, and 8d and the second feeding parts 9a, 9b, 9c, and 9d into the heating chamber 10 while the reflected power is suppressed, so that the object to be heated 11 can be efficiently heated.

The power detector parts 6a, 6b, 6c, and 6d provided between the power amplifier parts 5a, 5b, 5c, and 5d and the circulators 7a, 7b, 7c, and 7d, respectively detect a reflected power amount transmitted from the inside of the heating chamber 10 toward the microwave generator part in a detection target frequency band (for example, 2400MHs to 2500MHz), and extracts a detection signal proportional to the reflected power amount. When the control part 12 receives the detection signal proportional to the reflected power amount, it selects an oscillation frequency in which the reflected power is the minimum value in the detection target frequency band (for example, 2400MHz to 2500MHz). In this selecting operation of the oscillation frequency, the control part 12 gradually varies the oscillation frequencies of the first oscillator part 2a and the second oscillator part 2b under the condition that the phase differences generated between the first feeding parts 8a and 8b, and the first feeding parts 8c and 8d are set to 0 degree, by the phase variable parts 4a, 4b, 4c, and 4d, from an initial value of 2400MHz to the higher frequency at a pitch of 1MHz, for example, up to 2500MHz, which is an upper limit in the frequency variable range. The reflected power during this operation is detected by the power detector parts 6a, 6b, 6c, and 6d and the detection signals are inputted to the control part 12.

Thus, when the control part 12 performs the minimum reflected power exploring operation regarding the oscillation frequency, the control part 12 recognizes the transitory condition of the reflected power based on the oscillation frequencies of the first oscillator part 2a and the second oscillator part 2b. The control part 12 controls the first oscillator part 2a and the second oscillator part 2b to output the oscillation frequency in which the reflected power becomes smallest in the detection target frequency band, and drives and controls the first oscillator part 2a, the second oscillator part 2b, and the power amplifier parts 5a, 5b, 5c, and 5d such that the heating power corresponding to the heating condition for the object to be heated 11 inputted by the user can be provided. Desired microwave power signals that are the outputs of the driven and controlled power amplifier parts 5a, 5b, 5c, and 5d are supplied to the first feeding parts 8a, 8b, 8c, and 8d through the power detector parts 6a, 6b, 6c, and 6d and the circulators 7a, 7b, 7c, and 7d. The first feeding parts 8a, 8b, 8c, and 8d output the inputted microwave power to the object to be heated 11 in the heating chamber 10, and the reflected power received by the first feeding parts 8a, 8b, 8c, and 8d are supplied to the second feeding parts 9a, 9b, 9c, and 9d through the circulators 7a, 7b, 7c, and 7d. The second feeding parts 9a, 9b, 9c, and 9d radiate the microwave power of the reflected power, to the heating chamber 10 to heat the object to be heated 11.

### [Operation for exploring minimum-reflected-power]

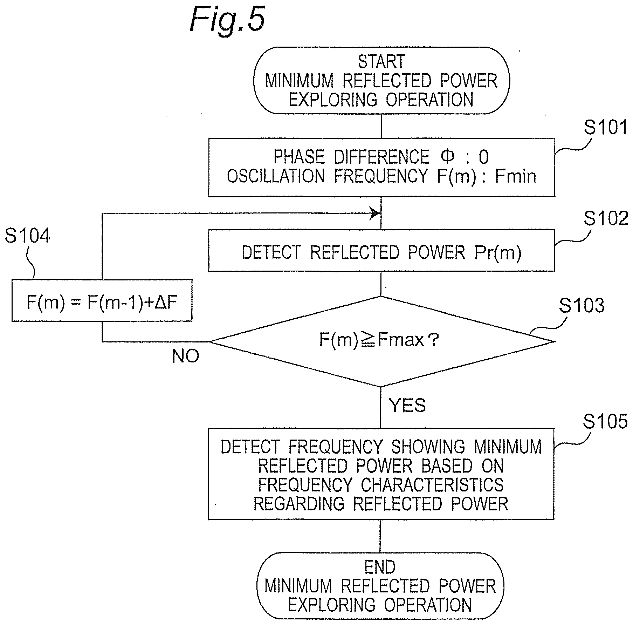

Next, the operation for exploring minimum-reflected-power performed before the main heating operation to heat the object to be heated on the predetermined power actually in the microwave heating apparatus of the first embodiment will be described in detail. Fig. 5 is a flowchart showing the operation for exploring minimum-reflected-power performed in the heating operation of the microwave heating apparatus shown in Fig. 4.

The operation for exploring minimum-reflected-power is started when the user presses the heating start key. Then, a phase difference (φ) outputted from the feeding parts controlled as the pair (for example, the first feeding parts 8a and 8b) is fixed to 0, and the oscillation frequency (F(m)) is set at a minimum frequency in the detection target frequency band (Fmin, 2400MHz, for example) in step 101, and the reflected power from the heating chamber is detected (step 102). Then, the oscillation frequency is raised gradually from the lowest frequency to the highest frequency (Fmax, 2500MHz, for example) by variation widths ΔF "m" times (m is a positive integer). At this time, the reflected power from the heating chamber is sequentially detected (step 102). The reflected power detection operation is continued until the maximum frequency in the detection target frequency band (step 102 to step 104). The frequency showing the minimum reflected power value is detected based on the frequency characteristics with respect to the reflected power detected in the reflected power detection operation, and the above frequency is set to the oscillation frequency of the first oscillator part 2a and the second oscillator part 2b at the time of the main heating operation (step 105). In addition, the control part 12 of the microwave heating apparatus of the first embodiment synthesizes frequency characteristic information regarding the reflected power inputted from the power detector parts 6a, 6b, 6c, and 6d to calculate one frequency characteristic curve to detect the frequency showing the minimum reflected power.

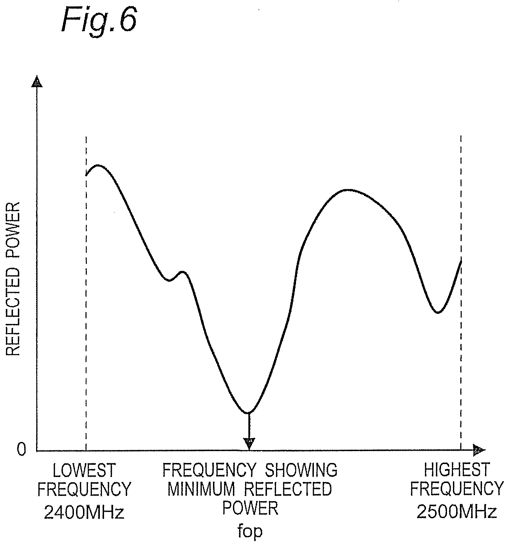

The above is the operation for exploring minimum-reflected-power executed before the main heating operation in the microwave heating apparatus according to the first embodiment. Fig. 6 is a view showing one example of the frequency characteristics provided by performing a sweeping operation from the lowest frequency (2400MHz) to the highest frequency (2500MHz) to measure the fluctuation of the reflected power in the operation for exploring minimum-reflected-power. The minimum value of the reflected power curve is the minimum reflected power frequency (fop) as shown in Fig. 6.

In addition, although the description has been made of the case where the operation for exploring minimum-reflected-power is performed from the lowest frequency to the highest frequency in the detection target frequency band in a single direction only, in the first embodiment of the present invention, the exploring operation may be performed from the highest frequency to the lowest frequency in the detection target frequency band in a single direction or in both directions.

Thus, after the operation for exploring minimum-reflected-power is performed as described above, the heating can be started for the object to be heated 11 having a different configuration, size and amount under the condition that the reflected power is the lowest, so that the semiconductor element provided in each of the power amplifier parts 5a, 5b, 5c, and 5d is prevented from generating excessive heat due to the reflected power, and thermal destruction can be avoided.

### [Local minimum reflected power tracking operation]

Next, a description will be made of the local minimum reflected power tracking operation performed in the main heating operation during the heating operation in the microwave heating apparatus of the first embodiment. The local minimum reflected power tracking operation is an operation to sequentially track a local minimum value of the reflected power during the main heating operation.

In the main heating operation at the frequency detected by the above operation for exploring minimum-reflected-power, the local minimum reflected power tracking operation is performed in such a way that the reflected power is kept at the local minimum value. In the following description of the local minimum reflected power tracking operation, a description will be made of the control regarding the oscillation frequency of the first oscillator part 2 during the heating operation, and the phase difference of the phase variable parts 4a and 4b controlled as the pair to which the output from the first oscillator part 2 is inputted. Since the same control as in the phase variable parts 4a and 4b is performed for another pair of phase variable parts 4c and 4d, only the control of the phase variable parts 4a and 4b is representatively described here, and the control of the phase variable parts 4c and 4d will not be described here.

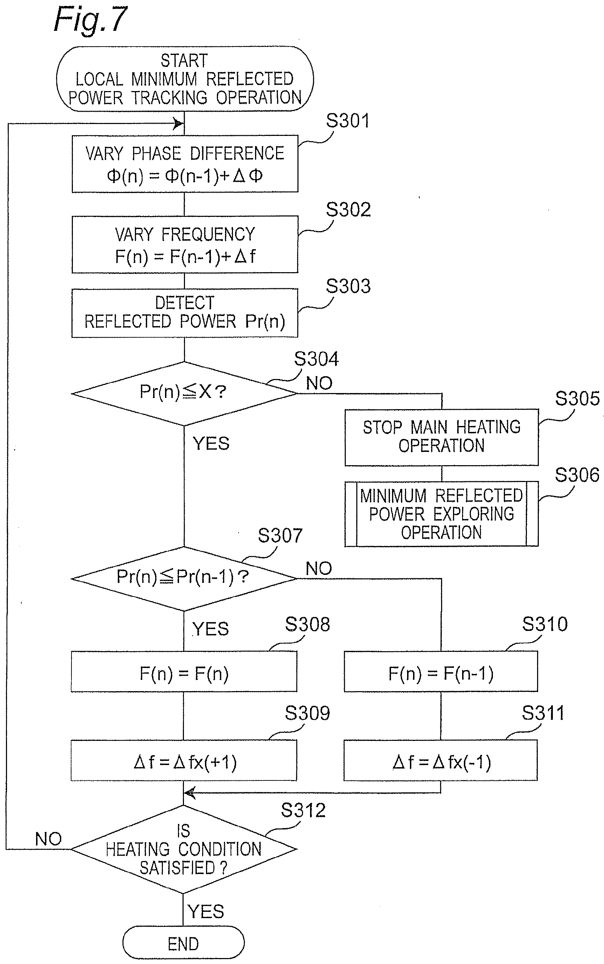

In the microwave heating apparatus of the first embodiment, Fig. 7 is a flowchart showing the local minimum reflected power tracking operation executed in the main heating operation, in which the local minimum value of the reflected power varying momentarily in the vicinity of the oscillation frequency is tracked by controlling the oscillation frequency of the first oscillator part 2 and the phase difference of the phase variable parts 4a and 4b.

In the microwave heating apparatus of the first embodiment, the phase variable parts 4a, 4b, 4c, and 4d vary their phases gradually from the heating start by predetermined variation amounts (Δφ). A position interfered by the microwave radiated by the first feeding parts 8a and 8b can be varied in the heating chamber by varying the phase of the phase variable parts 4a and 4b. Therefore, the object to be heated 11 can be heated uniformly or partially by varying the interference position by controlling the phase based on the position of the object to be heated 11 in the heating chamber 10.

During the heating operation in the microwave heating apparatus of the first embodiment, the phase difference (φ(n)) (n is a positive integer) of the phase variable parts 4a and 4b is varied at regular time intervals by a constant variation width Δφ such as 10 degrees (step 301). At this time, the first oscillator part 2a varies its oscillation frequency by a predetermined variation width Δf such as 0.1MHz at the same interval of time as when the phase variable parts 4a and 4b vary the phase difference (step 302). As described above, the reflected power (Pr(n)) is detected by the power detector parts 6a and 6b every time the phase difference of the phase variable parts 4a and 4b and the oscillation frequency of the first oscillator part 2a are varied (step 303).

It is determined whether the reflected power (Pr(n) detected in step 303 is higher than a predetermined value X or not (step 304). When the detected reflected power (Pr(n)) is higher than the predetermined value X (Pr(n) > X), it is determined that a condition that is largely different from the initial condition is generated in the object to be heated 11 in the heating chamber 10, the main heating operation is stopped once (step 305), and the minimum reflected power exploring operation performed just before the main heating operation is performed again in the microwave heating apparatus (step 306). This minimum reflected power exploring operation is performed in such a way that the phase difference is set to 0 degree as described above, the frequency is raised from the lowest frequency (2400MHz, for example) in the detection target frequency band by the predetermined variation width (0.1MHz, for example), and the reflected power is detected every time the frequency is varied. The operation for exploring minimum-reflected-power is performed, and the frequency characteristics regarding the reflected power in the heating chamber in which the object to be heated 11 is contained are detected. The control part 12 detects the frequency showing the minimum reflected power, based on the detected frequency characteristics, and controls the first oscillator part 2a and the second oscillator part 2b to oscillate at the detected frequency. Next, step 2 and the subsequent steps shown in Fig. 4 are performed.

Meanwhile, when the detected reflected power (Pr(n)) is smaller than the predetermined value X (Pr(n) ≤ X), the process proceeds to step 307. The control part 12 compares the reflected power (Pr(n)) detected at this time with the reflected power (Pr(n-1)) detected at last time and when the reflected power detected at this time is lower (Pr(n) ≤ Pr(n-1)), the present oscillation frequency is maintained (step 308). Thus, the sign (+) of the variation width Δf is maintained as it is (step 309), and the process proceeds to the next step 301. At this time, when the heating condition for the object to be heated 11 is satisfied, the heating operation is completed and at the same time, the local minimum reflected power tracking operation is also completed (step 312).

Meanwhile, the reflected power detected at this time is higher (Pr(n) > Pr(n-1)), the present oscillation frequency is changed to the previous oscillation frequency (step 310). Then, the sign of the variation width Δf is changed to an opposite sign (-) (step 311), and the process proceeds to the next step 301. At this time, when the heating condition for the object to be heated 11 is satisfied, the heating operation is completed and at the same time, the local minimum reflected power tracking operation is also completed (step 312).

Thus, by repeating the above local minimum reflected power tracking operation in the main heating operation, while the phase difference and the oscillation frequency are gradually varied, the reflected power from the heating chamber 10 can be controlled to attain the local minimum value constantly.

In addition, according to the microwave heating apparatus of the first embodiment, when the detected reflected power (Pr(n)) is higher than the predetermined value X (Pr(n) > X), the main heating operation is stopped once, and the operation for exploring minimum-reflected-power is performed again (step 306). However, when the main heating operation is stopped once, since a problem related to the cooking could arise, as another constitution, the powers outputted from the power amplifier parts 5a, 5b, 5c, and 5d may be reduced at a predetermined rate, for example.

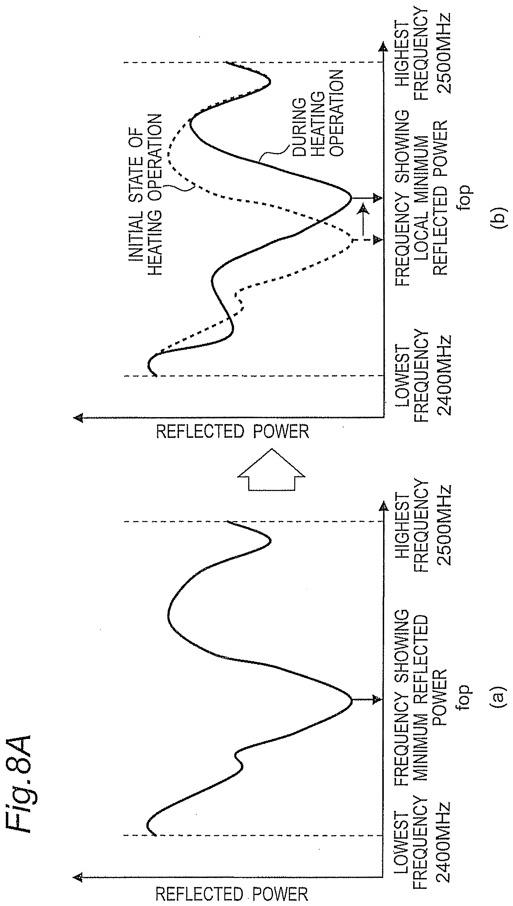

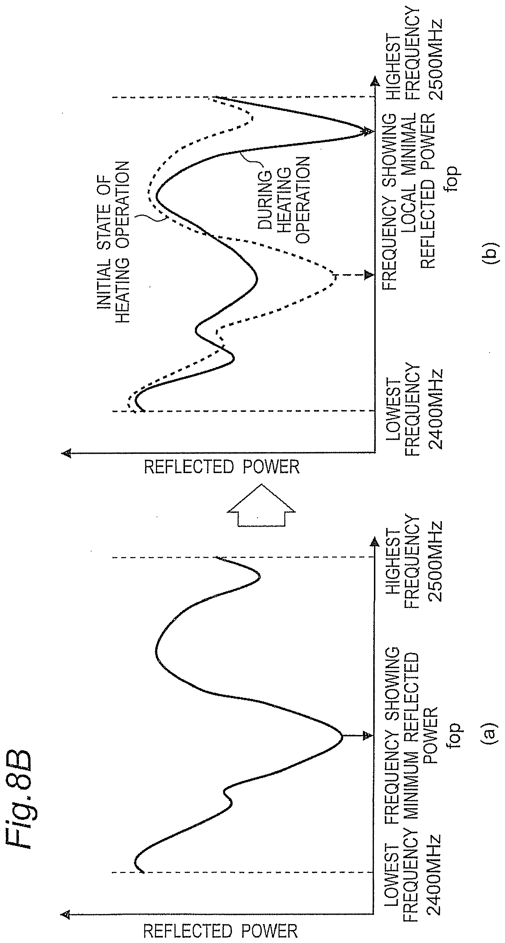

Figs. 8A and 8B are frequency characteristic diagrams with respect to the reflected power in the local minimum reflected power tracking operation. Referring to Fig. 8A, (a) is a frequency characteristic diagram detected before the main heating operation shown in Fig. 6, and (b) shows the state in which the local value is varied in the frequency characteristics varied during the main heating operation. Referring to (b) of Fig. 8A, a broken line shows the frequency characteristic curve before the main heating operation, and a solid line shows the frequency characteristic curve during the main heating operation. Since the local minimum value of the reflected power is tracked by the local minimum reflected power tracking operation during the heating operation in the microwave heating apparatus of the first embodiment, the heating can be always performed efficiently.

However, as shown in Fig. 8B, when the frequency characteristic curve during the heating operation is largely varied, that is, when the reflected power value (Pr(n)) is greater than the predetermined value X in step 304 in Fig. 7, since the local minimum value cannot be tracked by the local minimum reflected power tracking operation, the main heating operation is stopped once and the minimum reflected power exploring operation is performed. Referring to Fig. 8B, (a) is a frequency characteristic diagram detected before the main heating operation shown in Fig. 6, and (b) shows the frequency characteristic curve largely varied in the main heating operation. Referring to (b) of Fig. 8B, a broken line shows the frequency characteristic curve before the main heating operation, and a solid line shows the frequency characteristic curve largely varied during the main heating operation.

As described above, in the local minimum reflected power tracking operation, the phase variable parts 4a and 4b varies the phase difference φ by constant variation widths Δφ (phase difference of 10 degrees, for example) momentarily. The interference position of the microwave in the heating chamber 10 is varied by varying the phase difference φ generated by the phase variable parts 4a and 4b, so that the object to be heated 11 can be uniformly heated. Meanwhile, the interference position of the microwave in the heating chamber 10 is fixed by fixing the phase difference φ to a specific value, so that the object to be heated 11 can be partially heated.

According to the microwave heating apparatus of the first embodiment, since the heating operation is controlled as described above and the power detector parts 6a and 6b detect the reflected power from the heating chamber 10 during the heating operation, the control part 12 recognizes the state of the reflected power constantly to finely adjust the oscillation frequency momentarily, so that the inside of the heating chamber 10 can be maintained in the state of the low reflected power. In addition, according to the microwave heating apparatus of the first embodiment, since the phase difference is varied, the phase difference is finely adjusted momentarily in view of the state of the reflected power, so that the inside of the heating chamber 10 can be maintained in the state of the low reflected power.

Therefore, according to the microwave heating apparatus of the first embodiment, the semiconductor element can be prevented from generating heat, and the heating efficiency can be kept high, so that the heating can be done in a short time.

In addition, according to the microwave heating apparatus of the first embodiment, it can be constituted such that an allowable reflected power value is determined as a predetermined value, and the control part 12 temporally varies the phase difference of the phase variable parts 4a and 4b and the oscillation frequencies of the first oscillator part 2a and the second oscillator part 2b up to the allowable reflected power value. Thus, since the propagation condition of the microwave in the heating chamber 10 can be varied temporally by varying the phase difference and the oscillation frequency, the object to be heated 11 can be uniformly heated without being partially heated.

In addition, although the two phase variable parts 4a and 4b, and phase variable parts 4c and 4d are inserted to the outputs of the first power divider part 3a and the second power divider part 3b, respectively in the above description, the constitution may be such that the phase variable part is inserted to either the first power divider part 3a or the second power divider part 3b, and its phase variation width is adjusted to range from 0 degree to 360 degrees.

### [Phase control operation]

The microwave heating apparatus of the first embodiment has the constitution such that the phase variable parts 4a, 4b, 4c, and 4d can optionally vary the phase differences of the microwaves radiated from the two first feeding parts 8a and 8b, and the two first feeding parts 8c and 8d arranged oppositely to be controlled as the pairs, based on the control signal from the control part 12. Thus, the phases of the microwaves supplied from the opposite positions in the heating chamber is adjusted by the phase variable parts 4a, 4b, 4c, and 4d, and the desired electromagnetic wave distribution can be formed in the heating chamber. Each of the phase variable parts 4a, 4b, 4c, and 4d in the first embodiment is formed of the capacitance variable element whose capacitance varies based on an applied voltage, and its phase variable range is 0 degree to 180 degrees. In addition, even when the pair of first feeding parts 8a and 8b, and the pair of first feeding parts 8c and 8d controlled as the pairs are arranged not oppositely, such as at different positions in the same wall surface, or at positions in the adjacent wall surfaces, the electromagnetic wave distribution in the heating chamber 10 can be varied by adjusting the phase.

As described above, during the heating operation of the microwave heating apparatus of the fist embodiment, the phase differences of the microwaves radiated from the pair of first feeding parts 8a and 8b, and the pair of first feeding parts 8c and 8d controlled as the pairs in the first feeding parts 8a, 8b, 8c, and 8d serving as the antennas are varied by the phase control of the control part 12.

The reason why the object to be heated 11 can be uniformly or partially heated by the phase control of the control part 12 will be described hereinafter.

First, an experiment was performed by the inventor to know how the electromagnetic wave distribution in the heating chamber is varied by varying the phase difference of the microwaves radiated from the antennas as the feeding parts arranged oppositely in the wall surfaces of the heating chamber 10 as will be described below.

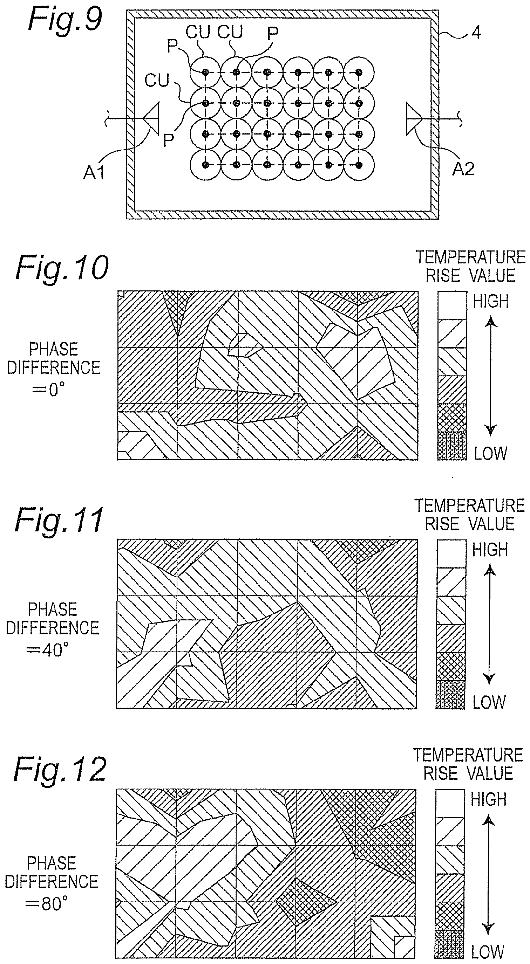

Fig. 9 is a planar sectional view showing the heating chamber 10 used in this experiment taken from the above. In this experiment, as shown in Fig. 9, a plurality of cups (designated as CU in Fig. 9) each containing a predetermined amount of water were arranged in the heating chamber 10. The temperature of the water in the center (designated as P in Fig. 9) of the cup (CU) was measured.

Then, the microwaves having varied phases were radiated from antennas (A1 and A2) arranged in the opposite wall surfaces of the heating chamber 10. Then, the radiation of the microwaves was stopped after a lapse of a predetermined time, and the temperature rise value of the water due to the radiation of the microwaves was measured in the center (P) in each cup (CU).

A plurality of phase differences between the microwave radiated from the antenna A1 and the microwave radiated from the antenna A2 were set, and the microwaves were radiated with respect to each set phase difference. In addition, in this experiment, the phase difference was varied every 40 degrees in the range of 0 degree to 320 degrees.

As described above, the electromagnetic field distribution of the microwaves in the heating chamber was examined by measuring the temperature rise value of the water arranged in the horizontal surface of the heating chamber of the microwave heating apparatus. According to this experiment, it can be determined that the electromagnetic field is intense at a region having a high temperature rise value of the water and the electromagnetic field distribution is weak at a region having a low temperature rise value of the water.

Fig. 10 shows an experimental result by isothermal lines based on the temperature rise values of the water when the phase difference of the microwave radiated from the antenna A1 and the microwave radiated from the antenna A2 is set to 0 degree. Similarly, Figs. 11 to 18 show the experimental result by isothermal lines when the phase differences of the microwave radiated from the antenna A1 and the microwave radiated from the antenna A2 are varied every 40 degrees in the range of 40 degrees to 320 degrees. In addition, each phase difference shown in Figs. 11 to 18 shows a delay phase of the microwave radiated from the antenna A1, based on the phase of the microwave radiated from the antenna A2.

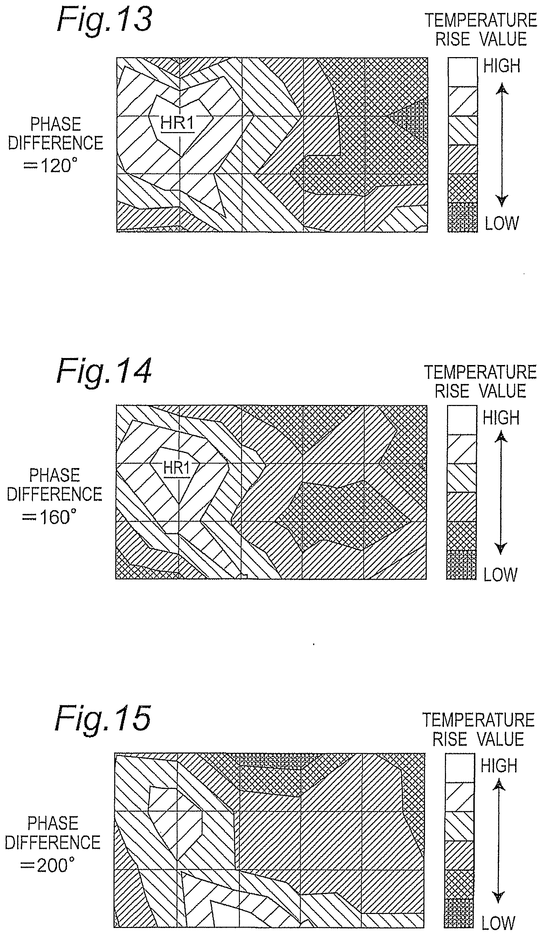

According to the experimental results shown in Figs. 10 to 18, the water temperature rise values are largely varied in the heating chamber. In addition, as shown in Figs. 13 and 14, when the phase differences are set to 120 degrees and 160 degrees, the temperature rise value is very high at the region (designated as HR1 in Figs. 13 and 14) close to the one side surface (left wall surface) of the heating chamber 10.

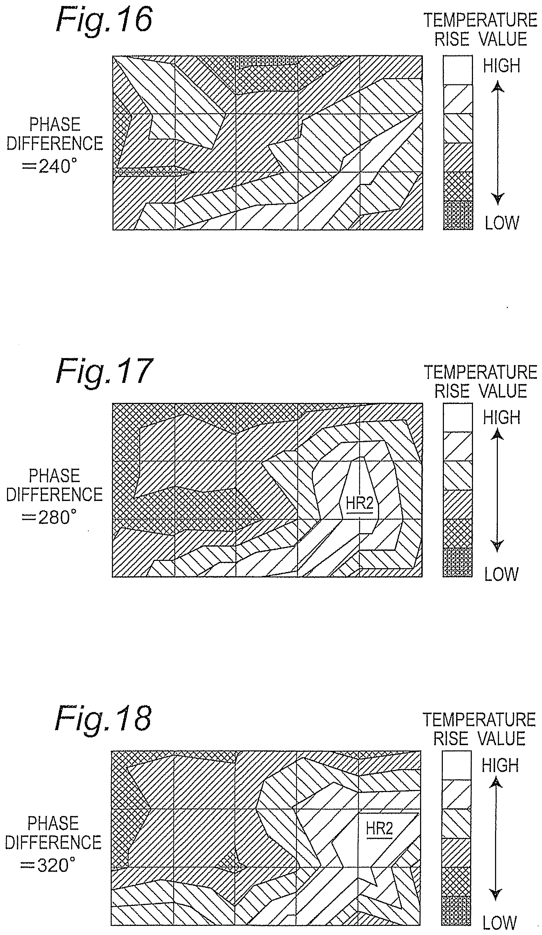

In addition, as shown in Figs. 17 and 18, when the phase differences are set to 280 degrees and 320 degrees, the temperature rise value is very high at the region (designated as HR2 in Figs. 17 and 18) close to the other side surface (right wall surface) of the heating chamber 10.

According to the experimental results, the inventor focused on the fact that the electromagnetic field distribution in the heating chamber is varied based on the phase difference of the microwaves radiated from the two antennas A1 and A2 arranged at the different positions. Thus, the inventor found that the object to be heated in the heating chamber can be uniformly heated and a specific part of the object to be heated can be heated intensively by varying the phase difference of the microwaves radiated from the antennas A1 and A2 arranged at the different positions such as the opposed wall surfaces.

Therefore, it is understood that the electromagnetic wave distribution in the heating chamber can be varied to the desired state by varying the phase difference of the microwaves radiated from the antennas A1 and A2 arranged at the different positions. Thus, it is not necessary to provide a conventional mechanism to move the object to be heated in the heating chamber in order to heat the object to be heated uniformly. Furthermore, since the electromagnetic wave distribution in the heating chamber can be varied by varying the phase difference as described above, it is not necessary to provide a conventional mechanism to move the antenna radiating the microwave.

Furthermore, as can be clear from the above experimental results, since the phenomenon caused by the collision of the microwaves radiated oppositely is generated as the variation of the electromagnetic field distribution, the same phenomenon is also generated by arranging the antennas A1 and A2 in such a way that the radiation directions of the microwaves radiated from the antenna A1 and the antenna A2 are crossed. This can be also implemented in a constitution in which the antennas A1 and A2 are arranged in the adjacent wall surfaces of the heating chamber.

Therefore, according to the microwave heating apparatus of the first embodiment in the present invention, since the mechanism to move the object to be heated or the antenna is not needed to provide the desired electromagnetic field distribution, it is not necessary to reserve the space for moving the object to be heated or the antenna. As a result, the constitution of the microwave heating apparatus of the first embodiment can be provided at low cost and can be miniaturized.

As described above, according to the microwave heating apparatus of the first embodiment in the present invention, when the feeding parts as the microwave supplying means having the function to radiate the microwaves are optimally arranged in the wall surfaces of the heating chamber, and the reflected power of the microwave radiated from the first feeding part is radiated again from the second feeding part to the heating chamber, the various objects to be heated having different configurations, kinds, sizes, and amounts can be heated efficiently to be in the desired state.

### (Second embodiment)

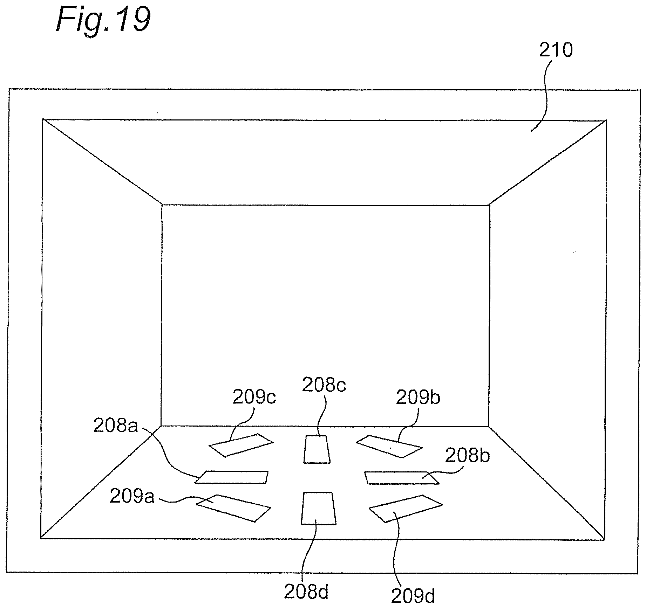

Fig. 19 is a schematic view showing a constitution of a feeding part of a heating chamber in a microwave heating apparatus of a second embodiment according to the present invention. The microwave heating apparatus of the second embodiment differs from the microwave heating apparatus of the first embodiment in the constitution of the feeding parts serving as antennas arranged in the wall surface of the heating chamber.

As shown in Fig. 19, according to the microwave heating apparatus of the second embodiment, the plurality of feeding parts are provided only in a bottom wall surface of a heating chamber 210. Since the microwave heating apparatus of the second embodiment differs from the microwave heating apparatus of the first embodiment in the arrangement of the feeding parts, and a constitution of a microwave generator part is the same as that shown in Fig. 1, a description will be made of the different point in the second embodiment.

Referring to Fig. 19, four first feeding parts 208a, 208b, 208c, and 208d and four second feeding parts 209a, 209b, 209c, and 209d are provided in the bottom wall surface of the heating chamber 210. As shown in Fig. 19, the openings of the first feeding part 208a and 208b controlled as the pair are arranged on a straight line with a predetermined space such that their longitudinal directions coincide with the right-and-left direction. In addition, the openings of the first feeding parts 208c and 208d are arranged on a straight line with a predetermined space such that their longitudinal directions coincide with a back-and-forth direction. The four first feeding parts 208a, 208b, 208c, and 208d are arranged in a radial manner roughly around a center shaft of a heating region on which the object to be heated is put, at an angle of 90 degrees.

Meanwhile, the openings of the second feeding parts 209a and 209b controlled as the pair are arranged in parallel with each other in the bottom wall surface and provided at the same distance roughly from the center axis of the heating region on which the object to be heated is put. According to the microwave heating apparatus of the second embodiment, the second feeding part 209a is provided between the first feeding parts 208a and 208d at an angle of 45 degrees with respect to each of them. Similarly, the second feeding part 209b is formed between the first feeding parts 208b and 208c at an angle of 45 degrees with respect to each of them. In addition, the longitudinal directions of the openings of the second feeding parts 209c and 209d controlled as the pair are arranged in parallel with each other in the bottom wall surface and provided at the same distance roughly from the center axis of the heating region on which the object to be heated is put. According to the microwave heating apparatus of the second embodiment, the second feeding parts 209c is provided between the first feeding parts 208a and 208c at an angle of 45 degrees with respect to each of them. Similarly, the second feeding part 209d is formed between the first feeding parts 208b and 208d at an angle of 45 degrees with respect to each of them.

As described above, the four first feeding parts 208a, 208b, 208c, and 208d are arranged in a radial manner roughly around the center axis of the heating region on which the object to be heated is put, and the four second feeding parts 209a, 209b, 209c, and 209d are arranged in the bottom wall surface oppositely at the same distance roughly from the center axis of the heating region on which the object to be heated is put. Although the description is made of the example in which the feeding parts are arranged as described above in the second embodiment, the microwave heating apparatus constituted such that the feeding parts controlled as the pair are arranged to have the same excitation direction and the microwave from the first feeding part is prevented from being transmitted to the second feeding part is contained in the present invention and has the same effect of the present invention.

According to the microwave heating apparatus of the second embodiment, since all of the feeding parts are provided in the bottom wall surface as described above, the constitution of the microwave generator part shown in Fig. 1 can be collectively arranged in the bottom of the microwave heating apparatus. According to the microwave heating apparatus of the second embodiment, since the microwave generator part is collectively arranged, a microwave transmission line can be shortened and the loss in the microwave transmission line can be considerably reduced.

As the microwave transmission line, a microstrip line, a coaxial line such as a semi-rigid cable or a waveguide tube provided on a substrate is used, for example. Although as the microstrip line, a line formed by processing a printed substrate is used in general, according to the second embodiment, the one constituted by providing a conductor to be a line on one surface of a dielectric sheet and bonding a conductor film to be the earth to the other surface thereof is used. In addition, as the dielectric sheet, a material such as polytetrafluoroethylene whose loss is low even at a high frequency is used. In addition, as the coaxial line used as the microwave transmission line, the one in which a conductor line to be the line is buried in a dielectric body and a shell conductor to be the earth is provided on an outer surface of the cable-shaped dielectric body is used in general. As described above, since the microstrip line and the coaxial line used as the microwave transmission line are formed of a dielectric body and a conductor, a dielectric loss in the dielectric body and an ohmic loss in the conductor are generated.

In addition, the waveguide tube used in general is formed of metal (having a rectangular section in general) has a disadvantage of a large size although its loss is small. For example, in order to transmit the frequency of about 2450MHz in the waveguide tube, a rectangular waveguide tube having a sectional configuration of about 110mm x 55mm is needed. Thus, the waveguide tube largely occupies the space of the microwave generator part.

According to the microwave heating apparatus of the second embodiment, the length of the microwave transmission line is short because the microwave generator part is collectively arranged. Therefore, the loss in the microwave transmission line is considerably reduced and the heating is performed efficiently.

### (Third embodiment)

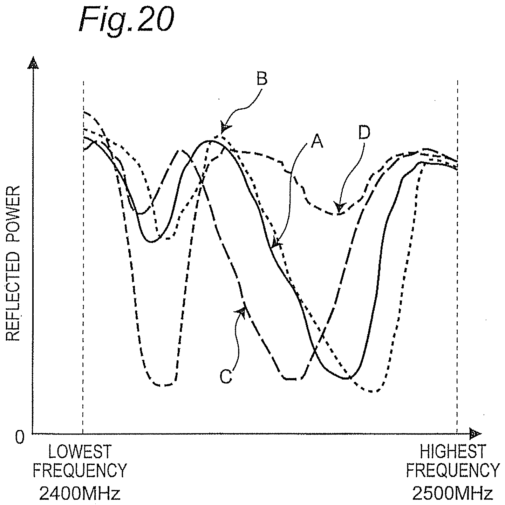

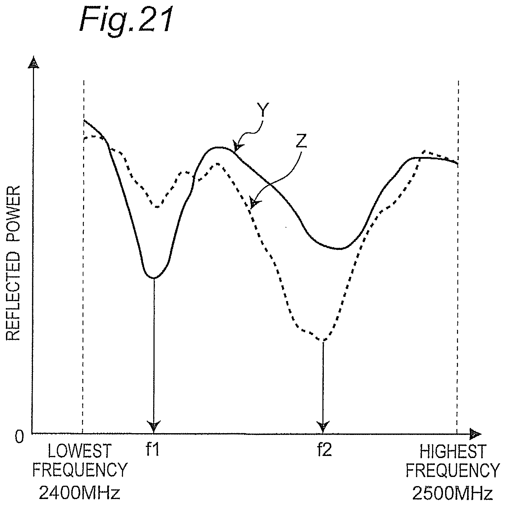

A microwave heating apparatus of a third embodiment according to the present invention will be described with reference to Figs. 20 and 21. The microwave heating apparatus of the third embodiment differs from the microwave heating apparatus of the first embodiment in a control operation of a control part in a microwave generator part. Therefore, a point different from the first and second embodiments will be described in the microwave heating apparatus of the third embodiment, and the references used in the description of the first embodiment is referred.

Fig. 20 shows one example of frequency characteristic curves of reflected powers detected by four power detector parts 6a, 6b, 6c, and 6d in a minimum reflected power exploring operation executed in an initial stage of a heating operation. In Fig. 20, reference A is the frequency characteristic curve of the reflected power which is received by the second feeding part 9a from the heating chamber 10 and is detected through the circulator 6a. Reference B is the frequency characteristic curve which is received by the second feeding part 9b from the heating chamber 10 and is detected through the circulator 6b. The second feeding parts 9a and 9b correspond to the first feeding parts 8a and 8b controlled as the pair. Similarly, reference C is the frequency characteristic curve of the reflected power which is received by the second feeding part 9c from the heating chamber 10 and is detected through the circulator 6c. Reference D is the frequency characteristic curve which is received by the second feeding part 9d from the heating chamber and is through the circulator 6d. The second feeding parts 9c and 9d correspond to the first feeding parts 8c and 8d controlled as the pair.

As shown in one example of the frequency characteristic curves A, B, C, and D in Fig. 20, the reflected powers detected by the power detector parts 6a, 6b, 6c, and 6d do not always show the same characteristic curves and not always show the minimum value at the same frequency. This is because the configuration of the object to be heated contained in the heating chamber is not a symmetric configuration, and the impedance in the heating chamber viewed from each feeding part is different.

The control part 12 (refer to Fig. 1) in the microwave heating apparatus of the third embodiment synthesizes the frequency characteristics A and B, and C and D controlled as the pairs in the frequency characteristics regarding the reflected powers inputted from the power detector parts 6a, 6b, 6c, and 6d.

Fig. 21 shows frequency characteristic curves provided by synthesizing the frequency characteristic curves A and B, and the frequency characteristic curves C and D. Referring to Fig. 21, a frequency characteristic curve Y is formed by synthesizing the frequency characteristic curves A and B in Fig. 20. In addition, a frequency characteristic curve Z is formed by synthesizing the frequency characteristic curves C and D in Fig. 20.

As shown in Fig. 21, according to the frequency characteristic curve Y formed by synthesizing the frequency characteristic curves A and B, the reflected power is the smallest at a frequency f1, and according to the frequency characteristic curve Z formed by synthesizing the frequency characteristic curves C and D, the reflected power is the smallest at a frequency f2. Therefore, the microwave having the frequency f1 is outputted from each of the first feeding parts 8a and 8b controlled as the pair, so that the efficient heating is performed on the low reflected power. Similarly, the microwave having the frequency f2 is outputted from each of the first feeding parts 8c and 8d controlled as the pair, so that the efficient heating is performed on the low reflected power.

As described above, according to the microwave heating apparatus of the third embodiment, the frequency showing the lower reflective power is detected for the pair of feeding parts, and the heating process is performed at that frequency. Therefore, according to the microwave heating apparatus of the third embodiment in the present invention, the heating can be performed on the low reflected power in a heating system as a whole, so that the heating system operated at the optimal heating frequency is constructed.

According to the microwave heating apparatus in the present invention, the object to be heated arranged in the heating chamber can be uniformly or partially heated by varying the phase difference of the microwaves radiated from the pair of feeding parts controlled as the pair to vary the electromagnetic wave distribution in the heating chamber during the heating operation of the object to be heated.

According to the microwave heating apparatus of the present invention, since the electromagnetic wave distribution in the heating chamber can be varied by varying the phase difference, the object to be heated can be uniformly or partially heated without being moved such as being rotated in the heating chamber.

In addition, according to the microwave heating apparatus of the present invention, it is not necessary to move the antenna serving as the feeding part radiating the microwave in order to heat the object to be heated uniformly and vary the electromagnetic distribution. Therefore, according to the microwave heating apparatus of the present invention, since the mechanism to move the object to be heated or the antenna is not needed, it is not necessary to reserve the space for moving the object to be heated and the antenna in the heating chamber, so that the microwave heating apparatus can be provided at low cost and can be miniaturized.

According to the microwave heating apparatus of the first embodiment, the control operation to vary the phase difference sequentially or in stages is performed by the control part. When the phase difference is varied in stages, the phase difference may be varied every 40 degrees or varied every 45 degrees. However, the value of the phase difference varied with respect to each stage is not limited to the above value and it is preferable the value is as small as possible. Thus, the object to be heated can be more uniformly heated and uneven heating can be reduced.

In addition, according to the microwave heating apparatus in the present invention, a cycle of the variation of the phase difference may be previously set, or set optionally by the user manually. When the cycle of the variation of the phase difference is fixedly set, it may be set so as to be varied from 0 degree to 360 degrees in 30 seconds, or it may be set so as to be varied from 0 degree to 360 degrees in 10 seconds.

In addition, the range of the variation of the phase difference is not necessarily the range of 0 degree to 360 degrees. For example, the value may be selectively set by the control part from the plurality of phase differences based on the heating condition of the object to be heated under the condition that the relations between the value of the plurality of phase differences and the electromagnetic field distributions corresponding to the phase differences are stored in an embedded memory of the control part previously. More specifically, a plurality of temperature sensors are arranged in the heating chamber to detect the temperature of the heating process region of the heating chamber. In this case, the temperature of the object to be heated can be measured at a plurality of positions, and the temperature distribution of the object to be heated can be known.

At this time, the control part sets the phase difference such that the electromagnetic field becomes intense at a low temperature part of the object to be heated to be uniformly heated, based on the relation between the phase difference and the electromagnetic field distribution stored in the embedded memory. Thus, the object to be heated can be uniformly heated with high efficiency by adjusting the phase difference.

### INDUSTRIAL APPLICABILITY

According to the microwave heating apparatus in the present invention, since heating operation can be performed with high efficiency by controlling the switching operation of the plurality of feeding parts radiating the microwaves and varying the phase difference of the microwaves between the feeding parts in operation, it can be applied to a heating apparatus represented by the microwave oven using dielectric heat, a disposer or a microwave power supply of a plasma power supply serving as a semiconductor production equipment.

## Claims

1. A microwave heating apparatus comprising:
a heating chamber (10) containing an object to be heated;
an oscillator part (2a, 2b);
a power divider part (3a, 3b) to divide an output of the oscillator part (2a, 2b) into a plurality of outputs;
a plurality of phase variable parts (4a-4d) each of which is connected to an output of the power divider part (3a, 3b) to vary an output phase of the power divider part (3a, 3b);
a plurality of power amplifier parts (5a-5d) to amplify the outputs of the phase variable parts (4a-4d);
a plurality of first feeding parts (8a-8d) to supply the outputs of the power amplifier parts (5a-5d) to the heating chamber (10);
a circulation type of non-reciprocal circuit (7a-7d) to supply the reflected power from the first feeding part (8a-8d) to the second feeding part (9a-9d);
a plurality of power detector parts (6a-6d) to detect the reflected power supplied from the second feeding parts (9a-9d) to the power amplifier parts (5a-5d); and
a control part (12) to control the oscillator part (2a, 2b), the power amplifier parts (5a-5d) and the phase variable parts (4a-4d) on the bases of information on the reflected power detected by the power detector parts (6a-6d),
wherein
the control part (12) controls a frequency of the oscillator part (2a, 2b) and phases of the phase variable parts (4a-4d) so that the reflected power is minimum,
**characterized in that**
a plurality of second feeding parts (9a-9d) to radiate again the reflected power of the microwave received by the first feeding parts (8a-8d) to the heating chamber (10);
a pair of the first feeding part (8a-8d) and the second feeding part (9a-9d), which is arranged on each wall of the heating chamber (10), has openings for radiating the microwaves to the heating chamber (10), and
an opening of the first feeding part (8a-8d) is configured to radiate the microwaves in different dominant excitation directions from the microwave radiated from an opening of the second feeding part (9a-9d).

2. The microwave heating apparatus according to claim 1, wherein
at least two microwave generator parts each comprising the oscillator part (2a, 2b), the power divider part (3a, 3b), the power amplifier part (5a-5d), the first feeding part (8a-8d), the second feeding part (9a-9d), and the non-reciprocal circuit (7a-7d) are provided.

3. The microwave heating apparatus according to claim 2, wherein
the first feeding part (8a-8d) and the second feeding part (9a-9d) are arranged in a same wall surface of the wall surfaces constituting the heating chamber (10).

4. The microwave heating apparatus according to claim 2, wherein
the plurality of first feeding parts (8a-8d) are arranged in a same wall surface of the wall surfaces constituting the heating chamber (10).

5. The microwave heating apparatus according to claim 2, wherein
the plurality of first feeding parts (8a-8d) are arranged in different wall surfaces of the wall surfaces constituting the heating chamber (10).

6. The microwave heating apparatus according to claim 2, wherein
the plurality of oscillator parts (2a, 2b) oscillate at the same frequency.

7. The microwave heating apparatus according to claim 2, wherein
the plurality of oscillator parts (2a, 2b) oscillate at different frequencies.

8. The microwave heating apparatus according to claim 2, wherein
each of the plurality of phase variable parts (4a-4d) variably controls an independent phase amount.

9. The microwave heating apparatus according to claim 2, wherein
the microwave generator part has a power detector part (6a-6d) to detect a reflected power from the heating chamber (10) to the power amplifier part (5a-5d), and a control part (12) to control an oscillation frequency of the oscillator part (2a, 2b) to be a frequency where the reflected power to the power amplifier part (5a-5d) becomes smallest.

10. The microwave heating apparatus according to claim 9, wherein
a power outputted from the power amplifier part (5a-5d) is reduced in a predetermined rate when the reflected power detected by the power detector part (6a-6d) becomes a predetermined value or more.

11. The microwave heating apparatus according to claim 9, wherein
the control part (12) performs a minimum reflected power exploring operation to explore the frequency showing the smallest reflected power from frequency characteristics regarding the reflected power detected by the power detector part (6a-6d) in a usable frequency band, in an initial state of a heating operation.

12. The microwave heating apparatus according to claim 11, wherein
the control part (12) lowers the output of the power amplifier part (5a-5d) when the minimum reflected power exploring operation is performed, and raises the output of the power amplifier part (5a-5d) when the minimum reflected power exploring operation is completed and the heating operation is performed at the frequency showing the smallest reflected power.

13. The microwave heating apparatus according to claim 9, wherein
the control part (12) performs a local minimum reflected power tracking operation to select the frequency showing the smaller value of the reflected power detected by the power detector part (6a-6d) sequentially to continue the heating operation during the heating operation.

14. The microwave heating apparatus according to claim 13, wherein
the control part (12) lowers the output of the power amplifier part (5a-5d) when the value of the reflected power detected by the power detector part (6a-6d) exceeds a predetermined value in the local minimum reflected power tracking operation.

15. The microwave heating apparatus according to claim 13, wherein
the control part (12) stops the heating operation when the value of the reflected power detected by the power detector part (6a-6d) exceeds a predetermined value in the local minimum reflected power tracking operation, and executes the minimum reflected power exploring operation to explore the frequency showing the smallest reflected power.

## Patentansprüche

1. Mikrowellen-Erwärmungsvorrichtung, umfassend:
eine Erwärmungskammer (10), enthaltend ein zu erwärmendes Objekt;
einen Oszillatorteil (2a, 2b);
einen Leistungsteilerteil (3a, 3b) zum Aufteilen eines Ausgangs des Oszillatorteils (2a, 2b) in eine Vielzahl von Ausgängen;
eine Vielzahl von phasenveränderlichen Teilen (4a-4d) von denen jedes mit einem Ausgang des Leistungsteilerteils (3a, 3b) verbunden ist um eine Ausgangsphase des Leistungsteilerteils (3a, 3b) zu verändern;
eine Vielzahl von Leistungsverstärkerteilen (5a-5d) zum Verstärken der Ausgänge der phasenveränderlichen Teile (4a-4d);
eine Vielzahl erster Einspeiseteile (8a-8d) zum Zuführen der Ausgänge der Leistungsverstärkerteile (5a-5d) zur Erwärmungskammer (10);
einen nichtreziproken Zirkulatorkreis (7a-7d) zum Zuführen der reflektierten Leistung vom ersten Einspeiseteil (8a-8d) zum zweiten Einspeiseteil (9a-9d);
eine Vielzahl von Leistungserfasserteilen (6a-6d) zum Erfassen der von den zweiten Einspeiseteilen (9a-9d) den Leistungsverstärkerteilen (5a-5d) zugeführten reflektierten Leistung; und
einen Steuerteil (12) zum Steuern des Oszillatorteils (2a, 2b), der Leistungsverstärkerteile (5a-5d) und der phasenveränderlichen Teile (4a-4d) auf Grundlage von Informationen über die durch die Leistungserfasserteile (6a-6d) erfasste reflektierte Leistung, wobei
der Steuerteil (12) eine Frequenz des Oszillatorteils (2a, 2b) und Phasen der phasenveränderlichen Teile (4a-4d) so steuert, dass die reflektierte Leistung ein Minimum ist,
**dadurch gekennzeichnet, dass**
eine Vielzahl zweiter Einspeiseteile (9a-9d) die reflektierte Leistung der durch die ersten Einspeiseteile (8a-8d) empfangenen Mikrowelle wieder zur Erwärmungskammer (10) strahlt;
ein Paar des ersten Einspeiseteils (8a-8d) und des zweiten Einspeiseteils (9a-9d), das an jeder Wand der Erwärmungskammer (10) angeordnet ist, Öffnungen zum Strahlen der Mikrowellen zur Erwärmungskammer (10) aufweist, und
eine Öffnung des ersten Einspeiseteils (8a-8d) ausgelegt ist, die Mikrowellen in verschiedene dominante Erregungsrichtungen bezüglich der von einer Öffnung des zweiten Einspeiseteils (9a-9d) abgestrahlten Mikrowelle abzustrahlen.

2. Mikrowellen-Erwärmungsvorrichtung nach Anspruch 1, wobei mindestens zwei Mikrowellengeneratorteile vorgesehen sind, jeweils umfassend den Oszillatorteil (2a, 2b), den Leistungsteilerteil (3a, 3b), den Leistungsverstärkerteil (5a-5d), den ersten Einspeiseteil (8a-8d), den zweiten Einspeiseteil (9a-9d) und den nichtreziproken Kreis (7a-7d).

3. Mikrowellen-Erwärmungsvorrichtung nach Anspruch 2, wobei der erste Einspeiseteil (8a-8d) und der zweite Einspeiseteil (9a-9d) in einer selben Wandfläche aus den Wandflächen angeordnet sind, aus denen die Erwärmungskammer (10) besteht.

4. Mikrowellen-Erwärmungsvorrichtung nach Anspruch 2, wobei die Vielzahl erster Einspeiseteile (8a-8d) in einer selben Wandfläche aus den Wandflächen angeordnet ist, aus denen die Erwärmungskammer (10) besteht.

5. Mikrowellen-Erwärmungsvorrichtung nach Anspruch 2, wobei die Vielzahl erster Einspeiseteile (8a-8d) in verschiedenen Wandflächen aus den Wandflächen angeordnet ist, aus denen die Erwärmungskammer (10) besteht.

6. Mikrowellen-Erwärmungsvorrichtung nach Anspruch 2, wobei die Vielzahl von Oszillatorteilen (2a, 2b) bei derselben Frequenz schwingt.

7. Mikrowellen-Erwärmungsvorrichtung nach Anspruch 2, wobei die Vielzahl von Oszillatorteilen (2a, 2b) bei verschiedenen Frequenzen schwingt.

8. Mikrowellen-Erwärmungsvorrichtung nach Anspruch 2, wobei jeder aus der Vielzahl von phasenveränderlichen Teilen (4a-4d) einen unabhängigen Phasenbetrag variabel steuert.

9. Mikrowellen-Erwärmungsvorrichtung nach Anspruch 2, wobei der Mikrowellengeneratorteil einen Leistungserfasserteil (6a-6d), um eine von der Erwärmungskammer (10) zum Leistungsverstärkerteil (5a-5d) reflektierte Leistung zu erfassen, und einen Steuerteil (12) aufweist, um eine Schwingfrequenz des Oszillatorteils (2a, 2b) so zu steuern, dass sie eine Frequenz ist, bei der die zum Leistungsverstärkerteil (5a-5d) reflektierte Leistung am kleinsten wird.

10. Mikrowellen-Erwärmungsvorrichtung nach Anspruch 9, wobei eine vom Leistungsverstärkerteil (5a-5d) ausgegebene Leistung in einem vorgegebenen Maß reduziert wird, wenn die durch den Leistungserfasserteil (6a-6d) erfasste reflektierte Leistung zu einem vorgegebenen Wert oder mehr wird.

11. Mikrowellen-Erwärmungsvorrichtung nach Anspruch 9, wobei der Steuerteil (12) in einem Anfangszustand des Erwärmungsvorgangs einen Sondierungsvorgang der minimalen reflektierten Leistung durchführt, um in einem Nutzfrequenzband die Frequenz aus dem Frequenzgang zu sondieren, die die geringste reflektierte Leistung bezüglich der durch den Leistungserfasserteil (6a-6d) erfassten reflektierten Leistung aufweist.

12. Mikrowellen-Erwärmungsvorrichtung nach Anspruch 11, wobei der Steuerteil (12) den Ausgang des Leistungsverstärkerteils (5a-5d) senkt, wenn der Sondierungsvorgang der minimalen reflektierten Leistung durchgeführt wird, und den Ausgang des Leistungsverstärkerteils (5a-5d) anhebt, wenn der Sondierungsvorgang der minimalen reflektierten Leistung abgeschlossen ist und der Erwärmungsvorgang bei der Frequenz durchgeführt wird, die die geringste reflektierte Leistung zeigt.

13. Mikrowellen-Erwärmungsvorrichtung nach Anspruch 9, wobei der Steuerteil (12) während des Erwärmungsvorgangs sequentiell einen Nachführvorgang der lokalen minimalen reflektierten Leistung durchführt, um die Frequenz zu wählen, die den kleineren Wert der durch den Leistungserfasserteil (6a-6d) erfassten reflektierten Leistung zeigt, um den Erwärmungsvorgang fortzusetzen.

14. Mikrowellen-Erwärmungsvorrichtung nach Anspruch 13, wobei der Steuerteil (12) den Ausgang des Leistungsverstärkerteils (5a-5d) senkt, wenn der Wert der durch den Leistungserfasserteil (6a-6d) erfassten reflektierten Leistung beim Nachführvorgang der lokalen minimalen reflektierten Leistung einen vorgegebenen Wert überschreitet.

15. Mikrowellen-Erwärmungsvorrichtung nach Anspruch 13, wobei der Steuerteil (12) den Erwärmungsvorgang unterbricht, wenn der Wert der durch den Leistungserfasserteil (6a-6d) erfassten reflektierten Leistung beim Nachführvorgang der lokalen minimalen reflektierten Leistung einen vorgegebenen Wert überschreitet, und den Sondierungsvorgang der minimalen reflektierten Leistung durchführt, um die Frequenz zu sondieren, die die geringste reflektierte Leistung zeigt.

## Revendications

1. Appareil de chauffage à micro-ondes comportant:
une chambre de chauffage (10) contenant un objet devant être chauffé; un membre oscillateur (2a, 2b);
un membre diviseur de puissance (3a, 3b) pour diviser une sortie du membre oscillateur (2a, 2b) en une multitude de sorties;
une multitude de membres à phase variable (4a-4d), chacun d'eux étant raccordé à une sortie du membre diviseur de puissance (3a, 3b) pour varier une phase de sortie du membre diviseur de puissance (3a, 3b);
une multitude de membres amplificateurs de puissance (5a-5d) pour amplifier les sorties des membres à phase variable (4a-4d);
une multitude de premiers membres d'alimentation (8a-8d) pour alimenter les sorties des membres amplificateurs de puissance (5a-5d) à la chambre de chauffage (10);
un type de circulation d'un circuit non réciproque (7a-7d) pour alimenter la puissance réfléchie depuis le premier membre d'alimentation (8a-8d) au second membre d'alimentation (9a-9d);
une multitude de membres détecteurs de puissance (6a-6d) pour détecter la puissance réfléchie alimentée depuis les seconds membres d'alimentation (9a-9d) aux membres amplificateurs de puissance (5a-5d); et
un membre de commande (12) pour commander le membre oscillateur (2a, 2b), les membres amplificateurs de puissance (5a-5d) et les membres à phase variable (4a-4d) sur la base d'informations sur la puissance réfléchie détectée par les membres détecteurs de puissance (6a-6d), dans lequel le membre de commande (12) commande une fréquence du membre oscillateur (2a, 2b) et des phases des membres à phase variable (4a-4d) de manière à ce que la puissance détectée soit minimale,
**caractérisé par**
une multitude de seconds membres d'alimentation (9a-9d) pour rayonner à nouveau la puissance réfléchie de la microonde reçue par les premiers membres d'alimentation (8a-8d) vers la chambre de chauffage (10);
une paire de premier membre d'alimentation (8a-8d) et de second membre d'alimentation (9a-9d), qui est disposée sur chaque paroi de la chambre de chauffage (10), possède des ouvertures pour rayonner les microondes vers la chambre de chauffage (10), et
une ouverture du premier membre d'alimentation (8a-8d) est configurée pour rayonner les microondes dans différentes directions d'excitation dominante à partir de la microonde rayonnée depuis une ouverture du second membre d'alimentation (9a-9d).

2. Appareil de chauffage à micro-ondes selon la revendication 1, dans lequel sont fournis au moins deux membres générateurs de micro-ondes comprenant chacun le membre oscillateur (2a, 2b), le membre diviseur de puissance (3a, 3b), le membre amplificateur de puissance (5a-5d), le premier membre d'alimentation (8a-8d), le second membre d'alimentation (9a-9d) et le circuit non réciproque (7a-7d).

3. Appareil de chauffage à micro-ondes selon la revendication 2, dans lequel le premier membre d'alimentation (8a-8d) et le second membre d'alimentation (9a-9d) sont disposés sur une même surface de paroi des surfaces de paroi constituant la chambre de chauffage (10).

4. Appareil de chauffage à micro-ondes selon la revendication 2, dans lequel la multitude de premiers membres d'alimentation (8a-8d) sont disposés sur une même surface de paroi des surfaces de paroi constituant la chambre de chauffage (10).

5. Appareil de chauffage à micro-ondes selon la revendication 2, dans lequel la multitude de premiers membres d'alimentation (8a-8d) sont disposés sur des surfaces de paroi différentes des surfaces de paroi constituant la chambre de chauffage (10).

6. Appareil de chauffage à micro-ondes selon la revendication 2, dans lequel la multitude de membres oscillateurs (2a, 2b) oscillent à la même fréquence.

7. Appareil de chauffage à micro-ondes selon la revendication 2, dans lequel la multitude de membres oscillateurs (2a, 2b) oscillent à des fréquences différentes.

8. Appareil de chauffage à micro-ondes selon la revendication 2, dans lequel chacun de la multitude de membres à phase variable (4a-4d) commande variablement une part de phase indépendante.

9. Appareil de chauffage à micro-ondes selon la revendication 2, dans lequel le membre générateur de micro-ondes comporte un membre détecteur de puissance (6a-6d) pour détecter une puissance réfléchie depuis la chambre de chauffage (10) vers le membre amplificateur de puissance (5a-5d), et un membre de commande (12) pour commander une fréquence d'oscillation du membre oscillateur (2a, 2b) pour qu'elle soit une fréquence à laquelle la puissance réfléchie vers le membre amplificateur de puissance (5a-5d) devient minimale.

10. Appareil de chauffage à micro-ondes selon la revendication 9, dans lequel une puissance émise par le membre amplificateur de puissance (5a-5d) est réduite d'un taux prédéterminé lorsque la puissance réfléchie détectée par le membre détecteur de puissance (6a-6d) devient une valeur prédéterminée ou plus.

11. Appareil de chauffage à micro-ondes selon la revendication 9, dans lequel le membre de commande (12) exécute une opération d'exploration de la puissance réfléchie minimale pour explorer la fréquence montrant la plus faible puissance réfléchie à partir de caractéristiques de fréquence concernant la puissance réfléchie détectée par le membre détecteur de puissance (6a-6d) dans une bande de fréquence utilisable, dans un état initiale d'une opération de chauffage.

12. Appareil de chauffage à micro-ondes selon la revendication 11, dans lequel le membre de commande (12) réduit la sortie du membre amplificateur de puissance (5a-5d) lorsque l'opération d'exploration de la puissance réfléchie minimale est exécutée, et accroît la sortie du membre amplificateur de puissance (5a-5d) lorsque l'opération d'exploration de la puissance réfléchie minimale est accomplie et l'opération de chauffage est exécutée à la fréquence montrant la plus faible puissance réfléchie.

13. Appareil de chauffage à micro-ondes selon la revendication 9, dans lequel le membre de commande (12) exécute séquentiellement une opération de poursuite de la puissance réfléchie minimale locale pour sélectionner la fréquence montrant la plus faible valeur de puissance réfléchie détectée par le membre détecteur de puissance (6a-6d) pour continuer l'opération de chauffage durant l'opération de chauffage.

14. Appareil de chauffage à micro-ondes selon la revendication 13, dans lequel le membre de commande (12) réduit la sortie du membre amplificateur de puissance (5a-5d) lorsque la valeur de la puissance réfléchie détectée par le membre détecteur de puissance (6a-6d) dépasse une valeur prédéterminée dans l'opération de poursuite de la puissance réfléchie minimale locale.

15. Appareil de chauffage à micro-ondes selon la revendication 13, dans lequel le membre de commande (12) arrête l'opération de chauffage lorsque la valeur de la puissance réfléchie détectée par le membre détecteur de puissance (6a-6d) dépasse une valeur prédéterminée dans l'opération de poursuite de la puissance réfléchie minimale locale, et exécute l'opération d'exploration de la puissance réfléchie minimale pour explorer la fréquence montrant la plus faible puissance réfléchie.
